# EUROPEAN PATENT APPLICATION

(11) **EP 4 586 563 A1**
(43) Date of publication of application: **16.07.2025**
(21) Application number: 22957742.4
(22) Date of filing: 08.09.2022
(51) Int. Cl.: H04L 27/00

(54) **HYBRID AUTOMATIC REPEAT REQUEST (HARQ) FEEDBACK METHOD AND APPARATUS, DEVICE, AND MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/117879
(87) International publication number: WO 2024/050770

(57) **Abstract**

The present application provides a hybrid automatic repeat request (HARQ) feedback method and apparatus, a device, and a medium. The method comprises: sending HARQ feedback of a physical downlink shared channel (PDSCH) scheduled on the basis of multi-cell downlink control information (MC DCI). When a base station schedules a multi-cell scheduling scheme for a terminal, the method can enable the terminal to perform HARQ feedback for the multi-cell scheduling scheme.

## Description

### TECHNICAL FIELD

The present disclosure relates to the field of communication, and in particular to a hybrid automatic repeat request (HARQ) feedback method, apparatus, device and medium.

### BACKGROUND

According to the discussion at the 3GPP (The 3rd Generation Partnership Project) RAN1 (Radio Access Network 1) meeting, for a terminal, the base station can schedule multiple types of multi-cell scheduling cases for the terminal. The multi-cell scheduling case includes scheduling PDSCH (Physical Downlink Shared Channel) on multiple cells by one DCI (Downlink Control Information).

When the above scheduling case is supported, how the terminal performs HARQ (Hybrid Automatic Repeat reQuest) feedback of the multi-cell scheduling case to the base station is an urgent problem to be solved.

### SUMMARY

The embodiments of the present application provide a hybrid automatic repeat request HARQ feedback method, apparatus, device and medium, which can enable a terminal to perform HARQ feedback for a multi-cell scheduling case.

According to one aspect of the present application, a hybrid automatic repeat request HARQ feedback method is provided, wherein the method is executed by a terminal, and the method includes:
sending a HARQ feedback of a downlink shared channel PDSCH scheduled based on multi-cell downlink control information MC DCI.

According to one aspect of the present application, a hybrid automatic repeat request HARQ feedback method is provided, wherein the method is performed by a network device, and the method includes:
receiving a HARQ feedback of a downlink shared channel PDSCH scheduled based on multi-cell downlink control information MC DCI.

According to one aspect of the present application, a hybrid automatic repeat request HARQ feedback apparatus is provided, wherein the apparatus includes:
a sending module, configured to send a HARQ feedback of a downlink shared channel PDSCH scheduled based on multi-cell downlink control information MC DCI.

According to one aspect of the present application, a hybrid automatic repeat request HARQ feedback apparatus is provided, wherein the apparatus includes:
a receiving module, configured to receive a HARQ feedback of a downlink shared channel PDSCH scheduled based on multi-cell downlink control information MC DCI.

According to one aspect of an embodiment of the present application, a terminal is provided, wherein the terminal includes a processor and a transceiver connected to the processor;
the transceiver is configured to send a HARQ feedback of a downlink shared channel PDSCH scheduled based on multi-cell downlink control information MC DCI.

According to one aspect of an embodiment of the present application, a network device is provided, wherein the network device includes a processor and a transceiver connected to the processor;
the transceiver is configured to receive a HARQ feedback of a downlink shared channel PDSCH scheduled based on multi-cell downlink control information MC DCI.

According to one aspect of the present application, a computer-readable storage medium is provided, in which a computer program is stored. The computer program is used to be executed by a processor to implement the method as described above.

According to one aspect of the present application, a chip is provided, which includes a programmable logic circuit and/or a program instruction, and when the chip is running, it is used to implement the method described above.

According to one aspect of the present application, a computer program product or a computer program is provided, wherein the computer program product or the computer program includes computer instructions, wherein the computer instructions are stored in a computer-readable storage medium, and a processor reads and executes the computer instructions from the computer-readable storage medium to implement the method as described above.

The technical solution provided by this application has at least the following beneficial effects:
When the base station schedules the PDSCH for the terminal on multiple cells, the terminal sends the HARQ feedback of the PDSCH scheduled by the MC DCI (Multi-Cell DCI, multi-cell downlink control information) to the base station to feed back the reception status of the PDSCH scheduled by the MC DCI to the base station.

### BRIEF DESCRIPTION OF THE DRAWINGS

The drawings described herein are used to provide a further understanding of the present application and constitute a part of the present application. The illustrative embodiments of the present application and their descriptions are used to explain the present application and do not constitute an improper limitation on the present application. In the drawings:
FIG. 1 is a schematic diagram of a communication system according to an embodiment of the present application;
FIG. 2 is a schematic diagram of a HARQ feedback method provided by an embodiment of the present application;
FIG. 3 is a schematic diagram of a HARQ feedback method provided by an embodiment of the present application;
FIG. 4 is a flow chart of a HARQ feedback method provided by an embodiment of the present application;
FIG. 5 is a flow chart of a HARQ feedback method provided by an embodiment of the present application;
FIG. 6 is a flow chart of a HARQ feedback method provided by an embodiment of the present application;
FIG. 7 is a schematic diagram of a HARQ feedback method provided by an embodiment of the present application;
FIG. 8 is a schematic diagram of a HARQ feedback method provided by an embodiment of the present application;
FIG. 9 is a schematic diagram of a HARQ feedback method provided by an embodiment of the present application;
FIG. 10 is a schematic diagram of a HARQ feedback method provided by an embodiment of the present application;
FIG. 11 is a flow chart of a HARQ feedback method provided by an embodiment of the present application;
FIG. 12 is a schematic diagram of a HARQ feedback method provided by an embodiment of the present application;
FIG. 13 is a schematic diagram of a HARQ feedback method provided by an embodiment of the present application;
FIG. 14 is a schematic diagram of a HARQ feedback method provided by an embodiment of the present application;
FIG. 15 is a schematic diagram of a HARQ feedback method provided by an embodiment of the present application;
FIG. 16 is a block diagram of a HARQ feedback apparatus provided by an embodiment of the present application;
FIG. 17 is a block diagram of a HARQ feedback apparatus provided by an embodiment of the present application; and
FIG. 18 is a block diagram of a communication device provided by an embodiment of the present application.

### DETAILED DESCRIPTION

Hereinafter, the present application will be described in detail with reference to the accompanying drawings and in combination with embodiments. It should be noted that the embodiments and features in the embodiments of the present application can be combined with each other without conflict.

When the following description refers to the drawings, unless otherwise indicated, the same numbers in different drawings represent the same or similar elements. The embodiments described in the following exemplary embodiments do not represent all embodiments consistent with the embodiments of the present disclosure. Instead, they are only examples of devices and methods consistent with some aspects of the embodiments of the present disclosure as detailed in the attached claims.

It should be noted that the terms "first", "second", etc. in the specification and claims of this application and the above-mentioned drawings are used to distinguish similar objects, and are not necessarily used to describe a specific order or sequence.

The terms used in the disclosed embodiments are only for the purpose of describing specific embodiments and are not intended to limit the disclosed embodiments. The singular forms of "a", "an" and "the" used in the disclosed embodiments and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the disclosed embodiments, the information should not be limited to these terms. These terms are only used to distinguish the same type of information from each other. For example, without departing from the scope of the disclosed embodiments, the first information may also be referred to as the second information, and similarly, the second information may also be referred to as the first information. Depending on the context, the words "if" and " in case " as used herein may be interpreted as "at" or "when" or "in response to determination".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

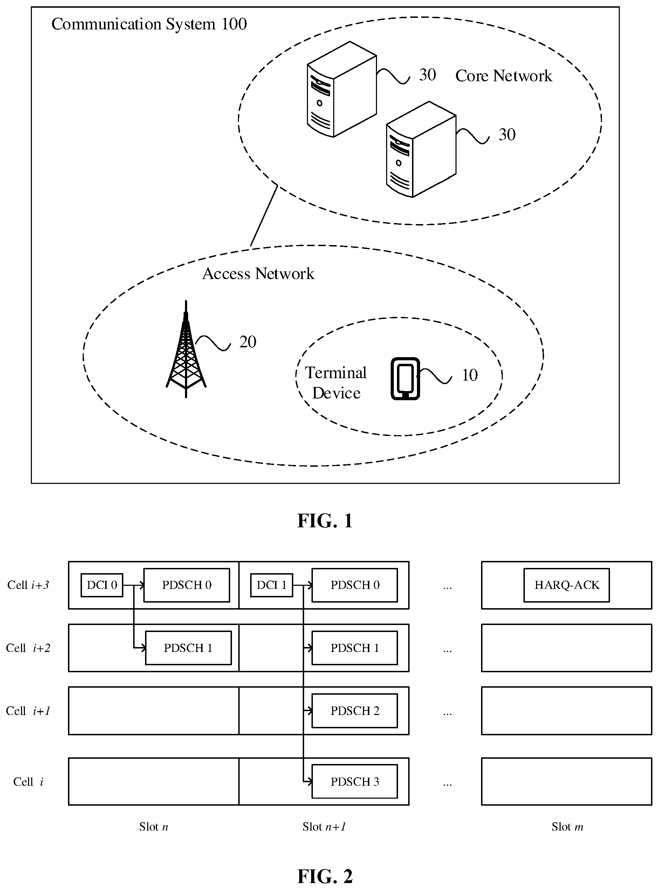

Please refer to FIG. 1, which shows a schematic diagram of a communication system 100 provided in an embodiment of the present application. The communication system 100 may include: a terminal 10, an access network device 20, and a core network device 30.

The terminal 10 may refer to a user equipment (UE), an access terminal, a user unit, a user station, a mobile site, a mobile station (MS), a remote station, a remote terminal, a mobile device, a wireless communication device, a user agent or a user device. Optionally, the terminal 10 may also be a cellular phone, a cordless phone, a session initiation protocol (SIP) phone, a wireless local loop (WLL) station, a personal digital assistant (PDA), a handheld device with wireless communication function, a computing device or other processing device connected to a wireless modem, a vehicle-mounted device, a wearable device, a terminal in the fifth generation mobile communication system (5th Generation System, 5GS) or a terminal in the future evolved public land mobile communication network (Pub 1ic Land Mobile Network, PLMN), etc., and the embodiments of the present application are not limited to this. For the convenience of description, the above-mentioned devices are collectively referred to as terminals. The number of terminals 10 is usually multiple, and one or more terminals 10 can be distributed in the cell managed by each access network device 20.

The access network device 20 is a device deployed in the access network to provide wireless communication functions for the terminal 10. The access network device 20 may include various forms of macro base stations, micro base stations, relay stations, access points, etc. In systems using different wireless access technologies, the names of devices with access network device functions may be different, for example, in the 5G NR system, they are called gNodeB or gNB. With the evolution of communication technology, the name "access network device" may change. For the convenience of description, in the embodiment of the present application, the above-mentioned devices that provide wireless communication functions for the terminal 10 are collectively referred to as access network devices. Optionally, a communication relationship can be established between the terminal 10 and the core network device 30 through the access network device 20. Exemplarily, in a Long Term Evolution (LTE) system, the access network device 20 may be an evolved universal terrestrial radio access network (EUTRAN) or one or more eNodeBs in the EUTRAN; in a 5G NR system, the access network device 20 may be a radio access network (RAN) or one or more gNBs in the RAN.

The core network device 30 is a device deployed in the core network. The functions of the core network device 30 are mainly to provide user connection, user management, and service bearing, and to provide an interface to the external network as a bearer network. For example, the core network device in the 5G NR system may include an access and mobility management function (AMF) network element, a user plane function (UPF) network element, a session management function (SMF) network element, an AUSF (Authentication Server Function) network element, a PAnF (ProSe Anchor Function) network element, a PKMF (ProSe Key Management Function) network element, and the like.

In one example, the access network device 20 and the core network device 30 communicate with each other via some air interface technology, such as the NG interface in the 5G NR system. The access network device 20 and the terminal 10 communicate with each other via some air interface technology, such as the Uu interface.

The "5G NR system" in the embodiments of the present application may also be referred to as a 5G system or an NR system, but those skilled in the art may understand its meaning. The technical solution described in the embodiments of the present application may be applicable to a 5G NR system or to any wireless communication system, for example, a subsequent evolution system of a 5G NR system, B5G, 6G, etc.

The technical solutions of the embodiments of the present application can be applied to various communication systems, such as: global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, new radio (NR) system, NR system evolution system, LTE -based access to unlicensed spectrum (LTE -U) system, NR-U system, universal mobile telecommunication system (UMTS), worldwide interoperability for microwave access (WiMAX) communication system, wireless local area network (WLAN) system, wireless fidelity (WiFi), next generation communication systems or other communication systems, etc.

When the UE reports the HARQ-ACK feedback of the decoded PDSCH to the base station, the UE can be configured as one HARQ-ACK (HARQ ACKnowledgement) bit corresponding to each reported transport block (TB). For reporting multiple HARQ-ACK bits at a time, there are generally two types of HARQ-ACK codebook construction: Type 1 HARQ-ACK codebook is constructed based on semi-static configuration only, which contains HARQ-ACK bits corresponding to all possible PDSCHs based on the configuration. Type 2 HARQ-ACK codebook is constructed based on semi-static configuration and the downlink assignment index (DAI) field in the DCI, which contains HARQ-ACK bits corresponding to the assumed assigned PDSCH. Currently, a DCI only supports scheduling in one cell or CC (Component Carrier), so generally speaking, one DCI corresponds to one PDSCH, corresponding to one HARQ-ACK bit.

According to the agreement reached at the 3GPP RANI meeting, for the same UE, the base station can schedule multiple types of multi-cell scheduling cases for the UE. A scheduling case refers to a DCI scheduling PDSCH on different numbers of cells.

The first scheduling scenario: the base station schedules PDSCHs for UEs on different numbers of cells at different times, and these PDSCHs are fed back collectively.

For example, as shown in FIG. 2, the base station sends DCI0 and DCI1 to the UE at different times, sends DCI0 to the UE in time slot n, and sends DCI1 to the UE in time slot n+1. DCI0 schedules PDSCH0 in cell i+3 and time slot n, and schedules PDSCH1 in cell i+2 and time slot n; DCI1 schedules PDSCH0 in cell i+3 and time slot n+1, schedules PDSCH1 in cell i+2 and time slot n+1, schedules PDSCH2 in cell i+1 and time slot n+1, and schedules PDSCH3 in cell i and time slot n+1. PDSCH0 and PDSCH1 scheduled by DCIO, and PDSCH0, PDSCH1, PDSCH2, and PDSCH3 scheduled by DCI1 all perform HARQ-ACK feedback on the same feedback resource (cell i+3, time slot m).

The second scheduling scenario: the base station schedules multiple scheduling cases for the UE at the same time (for example, in the same slot), and these scheduling cases are fed back collectively.

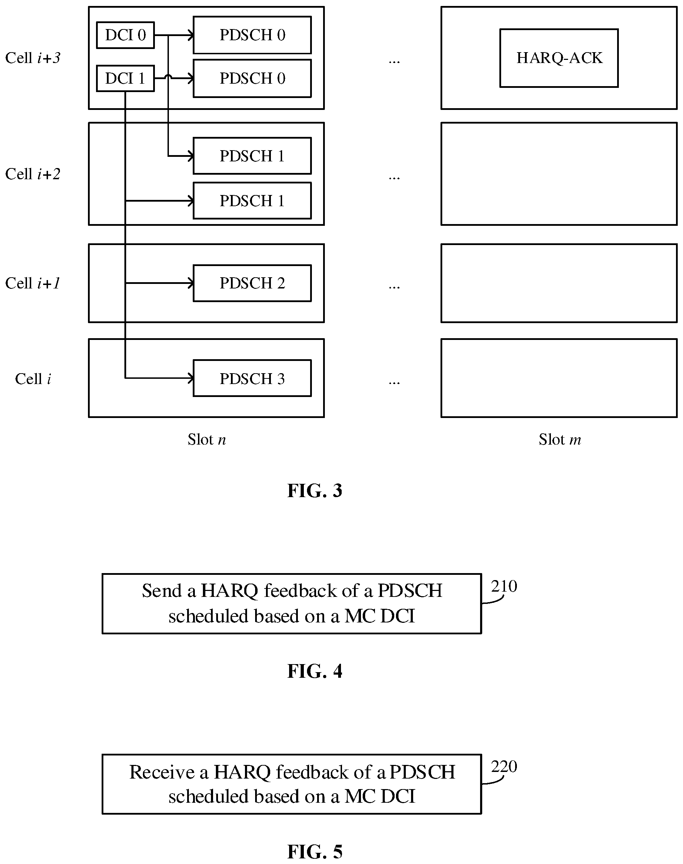

For example, as shown in FIG. 3, the base station sends DCI0 and DCI1 to the UE at the same time, and the base station sends DCI0 and DCI1 to the UE in the same time slot: time slot n, where DCI0 is a scheduling case: two PDSCHs are scheduled on two cells, and DCI1 is a scheduling case: four PDSCHs are scheduled on four cells. DCI0 schedules PDSCH0 in cell i+3, time slot n, and schedules PDSCH1 in cell i+2, time slot n; DCI1 schedules PDSCH0 in cell i+3, time slot n, schedules PDSCH1 in cell i+2, time slot n, schedules PDSCH2 in cell i+1, time slot n, and schedules PDSCH3 in cell i, time slot n. PDSCH0 and PDSCH1 scheduled by DCIO, and PDSCH0, PDSCH1, PDSCH2, and PDSCH3 scheduled by DCI1 all perform HARQ-ACK feedback on the same feedback resource (cell i+3, time slot m).

For the above scheduling scenarios, how the UE performs HARQ feedback for the PDSCH scheduled by multi-cell DCI is an urgent problem to be solved.

FIG. 4 shows a flow chart of a HARQ feedback method provided by an exemplary embodiment of the present application. The HARQ feedback method may be executed by a terminal. The method includes:
**Step 210:** Send a HARQ feedback of a PDSCH scheduled based on a MC DCI.

Optionally, the terminal sends the HARQ feedback to the network device (access network device), and the HARQ feedback is used to feedback the reception status of the PDSCH scheduled based on the MC DCI. The HARQ feedback is used to feedback the reception status of the PDSCH scheduled by at least one MC DCI, where one MC DCI schedules at least one PDSCH on at least one cell/carrier/component carrier/subband, and one PDSCH is scheduled on one cell/carrier/component carrier/subband.

Optionally, the at least one MC DCI may be sent by the base station at the same time, or the at least one MC DCI may be sent by the base station at different times. The PDSCH scheduled by the at least one MC DCI corresponds to the feedback resource of the same HARQ feedback, that is, the PDSCH scheduled by the at least one MC DCI shares the same HARQ feedback (or "HARQ-ACK feedback").

For example, at least one MC DCI includes a first MC DCI and a second MC DCI, the first MC DCI schedules three PDSCHs on three cells, and the second MC DCI schedules one PDSCH on one cell. The terminal sends HARQ feedback of the four PDSCHs to the access network device. The HARQ feedback includes the reception status of the four PDSCHs, and the reception status includes ACK (acknowledgement) or NACK (negative acknowledgement).

The at least one MC DCI may be of the same scheduling case or of different scheduling cases. The scheduling case refers to any one of the number of PDSCHs, the number of cells, the number of carriers, the number of component carriers, and the number of subbands scheduled by the MC DCI.

For example, in the above example, the number of PDSCHs scheduled by the first MC DCI and the second MC DCI is different, then the first MC DCI and the second MC DCI are different scheduling cases. Alternatively, the base station sends the first MC DCI, the second MC DCI and a third MC DCI to the terminal, and the third MC DCI schedules one PDSCH in one cell, then the first MC DCI and the second MC DCI are different scheduling cases, and the second MC DCI and the third MC DCI are the same scheduling case. The first MC DCI, the second MC DCI and the third MC DCI share one HARQ feedback.

Optionally, the terminal may also jointly feed back PDSCH scheduled by the MC DCI and the SC (Single-Cell) DCI. The SC DCI schedules one PDSCH on one cell/carrier/component carrier/subband.

It should be noted that the MC DCI and the SC DCI are different types of DCI, and the formats of the two DCIs are different. The SC DCI can only schedule one PDSCH on one cell/carrier/component carrier/subband. The MC DCI can schedule the PDSCH on at least one/carrier/component carrier/subband.

That is, the terminal sends the HARQ feedback based on the PDSCH scheduled by the MC DCI and the SC DCI, and the PDSCH scheduled by the MC DCI and the SC DCI share one HARQ feedback, wherein the number of MC DCIs is at least one and the number of SC DCIs is at least one.

Optionally, the at least one MC DCI and the at least one SC DCI may be sent by the base station at the same time, and/or, the at least one MC DCI and the at least one SC DCI may be sent by the base station at different times. The PDSCHs scheduled by the at least one MC DCI and the at least one SC DCI correspond to the same feedback resource of HARQ feedback, that is, the PDSCHs scheduled by the at least one MC DCI and the at least one SC DCI share the same HARQ feedback.

For example, at least one MC DCI includes a first MC DCI and a second MC DCI, and at least one SC DCI includes a first SC DCI. The first MC DCI schedules three PDSCHs on three cells, the second MC DCI schedules one PDSCH on one cell, and the first SC DCI schedules one PDSCH on one cell. The terminal sends HARQ feedback of the five PDSCHs to the access network device, and the HARQ feedback includes the reception status of the five PDSCHs, and the reception status includes ACK (acknowledgement) or NACK (negative acknowledgement).

In summary, in the method provided in this embodiment, when the base station schedules PDSCH for the terminal on multiple cells, the terminal sends the HARQ feedback of the PDSCH scheduled by the MC DCI to the base station, so as to feedback the reception status of the PDSCH scheduled by the MC DCI to the base station. Alternatively, when the base station schedules the PDSCH for the terminal based on the SC DCI and the MC DCI, the terminal sends the HARQ feedback of the PDSCH scheduled by the SC DCI and the MC DCI to the base station, so as to feedback the reception status of the PDSCH scheduled by the SC DCI and the MC DCI to the base station.

FIG. 5 shows a flow chart of a HARQ feedback method provided by an exemplary embodiment of the present application. The HARQ feedback method may be performed by a network device (access network device). The method includes:
**Step 220:** Receive a HARQ feedback of a PDSCH scheduled based on a MC DCI.

The access network device receives the HARQ feedback of the PDSCH scheduled based on the MC DCI sent by the terminal, where the HARQ feedback includes the reception status of the PDSCH scheduled by the at least one MC DCI.

Optionally, the terminal may also jointly feed back the PDSCH scheduled by the MC DCI and the SC DCI.

That is, the access network device receives the HARQ feedback of the PDSCH scheduled by the MC DCI and the SC DCI sent by the terminal, and the PDSCH scheduled by the MC DCI and the SC DCI share one HARQ feedback, wherein the number of MC DCIs is at least one and the number of the SC DCIs is at least one.

In summary, in the method provided in this embodiment, when the base station schedules the PDSCH for the terminal on multiple cells, the terminal sends the HARQ feedback of the PDSCH scheduled by the MC DCI to the base station, so as to feedback the reception status of the PDSCH scheduled by the MC DCI to the base station. Alternatively, when the base station schedules the PDSCH for the terminal based on the SC DCI and the MC DCI, the terminal sends the HARQ feedback of the PDSCH scheduled by the SC DCI and the MC DCI to the base station, so as to feedback the reception status of the PDSCH scheduled by the SC DCI and the MC DCI to the base station.

Optionally, an exemplary embodiment of generating the HARQ feedback of the PDSCH scheduled based on the MC DCI is given.

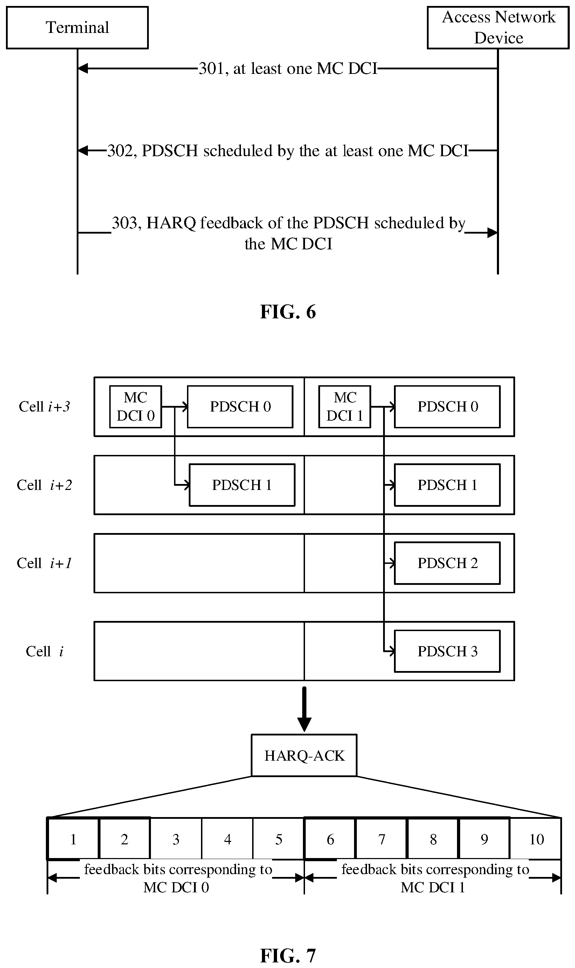

FIG. 6 shows a flow chart of a HARQ feedback method provided by an exemplary embodiment of the present application. The HARQ feedback method can be performed by a terminal and an access network device. The method includes:
**Step 301:** The access network device sends at least one MC DCI to the terminal.

The terminal receives at least one MC DCI sent by the access network device.

The access network device sends MC DCI to the terminal to schedule PDSCH for the terminal in at least one cell.

Optionally, the MC DCI is carried on a PDCCH (Physical Downlink Control Channel).

**Step 302:** The access network device sends a PDSCH scheduled by the at least one MC DCI to the terminal.

The terminal receives the PDSCH sent by the access network device according to the scheduling of at least one MC DCI.

The number of the PDSCHs is at least one. Optionally, one TB is carried by at least one PDSCH. Optionally, one PDSCH carries one TB.

**Step 303:** The terminal sends HARQ feedback of the PDSCH scheduled by the MC DCI to the access network device.

Optionally, the PDSCH scheduled by the at least one MC DCI shares one HARQ feedback.

The embodiments of the present application provide four methods for generating the HARQ feedback of the PDSCH scheduled by the MC DCI:

### Method 1:

### 1) Number of HARQ bits:

The number of bits of HARQ feedback is determined according to the maximum number N of the scheduled cells of the terminal.

N is the maximum number of the scheduled cells of the terminal, that is, the terminal supports at most one MC DCI to schedule N PDSCHs on N cells/carriers/component carriers/subbands, where N is a positive integer.

The maximum number of scheduled cells is the maximum number of supported cells reported by the terminal to the network device; or, the maximum number of scheduled cells is the maximum number of supported cells configured by the network device for the terminal.

The method for determining N includes at least one of the following:
· N is predefined by the protocol;
· N is configured to the terminal by the access network device through RRC (Radio Resource Control) signaling;
· N is indicated to the terminal by the access network device through dynamic signaling; and
· N is reported by the terminal to the access network device.

The HARQ feedback is used to feedback the PDSCH scheduled by at least one MC DCI. The HARQ feedback includes at least one MC DCI common sub-codebook. The sub-codebook includes a bit corresponding to at least one MC DCI. One MC DCI corresponds to N bits or one bit, where N is the maximum number of the scheduled cells of the terminal.

For example, if HARQ feedback is used to feedback PDSCH scheduled by x MC DCIs, then HARQ feedback includes a sub-codebook shared by the x MC DCIs, and the sub-codebook includes a maximum of x*N bits (i.e., each MC DCI corresponds to N bits), and a minimum of x bits (i.e., each MC DCI corresponds to 1 bit). Of course, it is not excluded that some of the x MC DCIs correspond to N bits and some of the MC DCIs correspond to 1 bit.

Optionally, the number of bits included in the HARQ feedback is determined in one of the following two ways:
Mode (1): When the MC DCI schedules one PDSCH, the MC DCI corresponds to one bit; and when the MC DCI schedules multiple PDSCHs, the MC DCI corresponds to N bits.

That is, the at least one MC DCI includes: a first MC DCI; in the case that the first MC DCI schedules one PDSCH, the first MC DCI corresponds to one bit; and in the case that the first MC DCI schedules multiple PDSCHs, the first MC DCI corresponds to N bits, where N is the maximum number of the scheduled cells of the terminal.

For example, the maximum number of the scheduled cells of the terminal is 5. The HARQ feedback is used to feedback the first MC DCI and the second MC DCI, the first MC DCI schedules four PDSCHs on four cells, and the second MC DCI schedules one PDSCH on one cell. Then the HARQ feedback includes 6 bits, including 5 bits corresponding to the first MC DCI and 1 bit corresponding to the second MC DCI.

Mode (2): Each MC DCI corresponds to N bits.

That is, one MC DCI corresponds to N bits, where N is the maximum number of the scheduled cells of the terminal.

For example, the maximum number of the scheduled cells of the terminal is 5. The HARQ feedback is used to feed back the first MC DCI and the second MC DCI, the first MC DCI schedules four PDSCHs on four cells, and the second MC DCI schedules one PDSCH on one cell. Then the HARQ feedback includes 10 bits, including 5 bits corresponding to the first MC DCI and 5 bits corresponding to the second MC DCI.

### 2) Feedback bit ordering of the sub-codebook in HARQ feedback:

The feedback bits of each sub-codebook in the HARQ feedback are sorted in time-frequency order.

Optionally, the time-frequency order may be the time-frequency order of DCI or the time-frequency order of PDSCH.

The time-frequency order in the embodiment of the present application may include: first sorting in the time domain and then sorting in the frequency domain; and first sorting in the frequency domain and then sorting in the time domain. The sorting methods include sequential and reverse order.

That is, the time-frequency order includes one of the following:
· Sort in sequential order in the time domain first, then in sequential order in the frequency domain;
· Sort in sequential order in the frequency domain first, then in sequential order in the time domain;
· Sort in sequential order in the time domain first, then in reverse order in the frequency domain;
· Sort in sequential order in the frequency domain first, then in reverse order in the time domain;
· Sort in reverse order in the time domain first, then in reverse order in the frequency domain;
· Sort in reverse order in the frequency domain first, then in reverse order in the time domain;
· Sort in reverse order in the time domain first, then in sequential order in the frequency domain order; and
· Sort in reverse order in the frequency domain first, then in sequential order in the time domain.

### 3) Sorting of sub-codebooks in HARQ feedback:

The sub-codebooks in the HARQ feedback are sorted according to a first rule; wherein the first rule includes sorting according to at least one of the type of sub-codebook, cell index, time domain order of DCI, frequency domain order of DCI, time domain order of PDSCH, PDCCH monitoring occasion index, and DCI decoding success time order. Optionally, the first rule may also be referred to as a first predefined rule, that is, the first rule may be predefined by a protocol.

Optionally, when the HARQ feedback is only used to feed back MC DCI, at least one MC DCI shares one sub-codebook, and the HARQ feedback includes only one sub-codebook.

### 4) Determination of valid feedback bits:

Optionally, when one MC DCI corresponds to N bits in the sub-codebook, if the number of PDSCHs actually scheduled by the MC DCI is less than N, it is necessary to determine valid feedback bits among the N bits.

The at least one MC DCI includes a second MC DCI; when the number of bits corresponding to the second MC DCI in the sub-codebook is greater than the number of PDSCHs/number of cells/number of carriers/number of component carriers/number of subbands actually scheduled by the second MC DCI, the sub-codebook includes valid feedback bits.

That is, when the number of bits corresponding to the second MC DCI in the sub-codebook is greater than the number of PDSCHs actually scheduled by the second MC DCI, the terminal determines the valid feedback bits corresponding to the second MC DCI in the sub-codebook.

For example, the maximum number of the scheduled cells of the terminal is 5. HARQ feedback is used to feedback the first MC DCI. The first MC DCI schedules 4 PDSCHs on 4 cells. The first MC DCI corresponds to 5 feedback bits in the HARQ feedback. In this case, it is necessary to determine which feedback bits of the 5 feedback bits are used to feedback the four PDSCHs. The feedback bits used to feedback the 4 PDSCHs are valid feedback bits.

The embodiments of the application provide six modes for determining valid feedback bits:

### Mode 1:

The first n bits of the N bits are valid feedback bits, N is the number of bits corresponding to the MC DCI in the sub-codebook, and n is the number of PDSCHs/cells/carriers/component carriers/subbands actually scheduled by the MC DCI. The n bits are sorted in sequential order of the cell index corresponding to the PDSCH.

When the number of bits corresponding to the second MC DCI in the sub-codebook is N, and the number of cells actually scheduled by the second MC DCI is n, the first n bits of the N bits are valid feedback bits. The first bit of the n bits corresponds to the PDSCH with the smallest cell index, the second bit corresponds to the PDSCH with the second smallest cell index, and so on.

### Mode 2:

The first n bits of the N bits are valid feedback bits, N is the number of bits corresponding to the MC DCI in the sub-codebook, and n is the number of PDSCHs/cells/carriers/component carriers/subbands actually scheduled by the MC DCI. The n bits are sorted in reverse order according to the cell index corresponding to the PDSCH.

When the number of bits corresponding to the second MC DCI in the sub-codebook is N, and the number of cells actually scheduled by the second MC DCI is n, the first n bits of the N bits are valid feedback bits. The first bit of the n bits corresponds to the PDSCH with the largest cell index, the second bit corresponds to the PDSCH with the second largest cell index, and so on.

### Mode 3:

The last n bits of the N bits are valid feedback bits, N is the number of bits corresponding to the MC DCI in the sub-codebook, and n is the number of PDSCHs/cells/carriers/component carriers/subbands actually scheduled by the MC DCI. The n bits are sorted in sequential order of the cell index corresponding to the PDSCH.

When the number of bits corresponding to the second MC DCI in the sub-codebook is N, and the number of cells actually scheduled by the second MC DCI is n, the last n bits of the N bits are valid feedback bits. The first bit of the n bits corresponds to the PDSCH with the smallest cell index, the second bit corresponds to the PDSCH with the second smallest cell index, and so on.

### Mode 4:

The last n bits of the N bits are valid feedback bits, N is the number of bits corresponding to the MC DCI in the sub-codebook, and n is the number of PDSCHs/cells/carriers/component carriers/subbands actually scheduled by the MC DCI. The n bits are sorted in reverse order according to the cell index corresponding to the PDSCH.

When the number of bits corresponding to the second MC DCI in the sub-codebook is N, and the number of cells actually scheduled by the second MC DCI is n, the last n bits of the N bits are valid feedback bits. The first bit of the n bits corresponds to the PDSCH with the largest cell index, the second bit corresponds to the PDSCH with the second largest cell index, and so on.

### Mode 5:

Each bit in the N bits corresponds to a potential scheduling cell, and the bits corresponding to the N potential scheduling cells among the N bits are sorted in sequential order of the cell index. When a potential scheduling cell is actually scheduled, the bit corresponding to the potential scheduling cell is a valid feedback bit.

The potential scheduling cell is a cell that the base station may schedule for the terminal.

When the number of bits corresponding to the second MC DCI in the sub-codebook is N, and the number of cells actually scheduled by the second MC DCI is n, n bits among the N bits are valid feedback bits. The number of potential scheduling cells configured by the base station for the UE is N. The first bit among the N bits corresponds to the potential scheduling cell with the smallest cell index among the N potential scheduling cells, the second bit among the N bits corresponds to the potential scheduling cell with the second smallest cell index among the N potential scheduling cells, and so on. The valid feedback bits correspond one-to-one to the actually scheduled cells. For example, if the potential scheduling cell with the second smallest cell index among the N potential scheduling cells is scheduled, the second bit out of the N bits is a valid feedback bit.

### Mode 6:

Each bit in the N bits corresponds to a potential scheduling cell, and the bits corresponding to the N potential scheduling cells among the N bits are sorted in reverse order of the cell index. When a potential scheduling cell is actually scheduled, the bit corresponding to the potential scheduling cell is a valid feedback bit.

When the number of bits corresponding to the second MC DCI in the sub-codebook is N, and the number of cells actually scheduled by the second MC DCI is n, n bits among the N bits are valid feedback bits. The number of potential scheduling cells configured by the base station for the UE is N. The first bit among the N bits corresponds to the potential scheduling cell with the largest cell index among the N potential scheduling cells, the second bit among the N bits corresponds to the potential scheduling cell with the second largest cell index among the N potential scheduling cells, and so on. The valid feedback bits correspond one-to-one to the actually scheduled cells. For example, if the potential scheduling cell with the second largest cell index among the N potential scheduling cells is scheduled, the second bit among the N bits is a valid feedback bit.

Based on the above description of method 1, the following two examples are given:
1. The number of bits in the sub-codebook in HARQ feedback is N bits for each MC DCI. The feedback bits in the sub-codebook are sorted according to the time-frequency order of the DCI, first in the time domain order and then in the frequency domain order. When the number of bits in the sub-codebook is greater than the number of cells actually scheduled, the first n bits are valid feedback bits.
   As shown in FIG. 7, the base station sends MC DCIO and MC DCI1 to the terminal. MC DCI0 schedules two PDSCHs: PDSCH0 and PDSCH1; MC DCI1 schedules four PDSCHs: PDSCH0, PDSCH1, PDSCH2, and PDSCH3. If the maximum number of the scheduled cells of the terminal is 5, that is, N is 5, the HARQ feedback includes a sub-codebook including 10 feedback bits, and the 10 feedback bits include 5 feedback bits corresponding to MC DCI0 and 5 feedback bits corresponding to MC DCI1. The 10 feedback bits are sorted according to the time-frequency order of MC DCI0 and MC DCI1, with the first 5 feedback bits corresponding to MC DCI0 and the last 5 feedback bits corresponding to MC DCI1. In addition, the first 2 feedback bits of the first 5 feedback bits are valid feedback bits, and the first 4 feedback bits of the last 5 feedback bits are valid feedback bits. In the sub-codebook of HARQ feedback, the first feedback bit is used to feedback PDSCH0 scheduled by MC DCIO; the second feedback bit is used to feedback PDSCH1 scheduled by MC DCIO; the third feedback bit to the fifth feedback bit are invalid feedback bits (do not carry feedback information); the sixth feedback bit to the ninth feedback bit are respectively used to feedback PDSCH0, PDSCH1, PDSCH2, and PDSCH3 scheduled by MC DCI1; the tenth feedback bit is an invalid feedback bit.
2. The number of bits in the sub-codebook in HARQ feedback is 1 bit for MC DCI that schedules one PDSCH and N bits for MC DCI that schedules multiple PDSCHs. The feedback bits in the sub-codebook are sorted in the time domain order first and then the frequency domain order according to the time-frequency order of DCI. When the number of bits in the sub-codebook is greater than the number of cells actually scheduled, the valid feedback bits are determined based on the feedback bits corresponding to the potential scheduled cells.

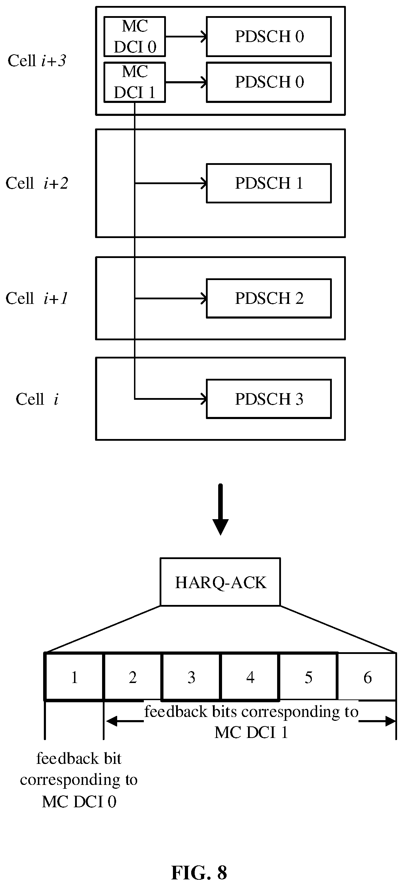

As shown in FIG. 8, the base station sends MC DCI0 and MC DCI1 to the terminal. MC DCI0 schedules one PDSCH: PDSCH0; MC DCI1 schedules four PDSCHs: PDSCH0, PDSCH1, PDSCH2, and PDSCH3. If the maximum number of the scheduled cells of the terminal is 5, that is, N is 5. The HARQ feedback includes a sub-codebook including 6 feedback bits, including 1 feedback bit corresponding to MC DCI0 and 5 feedback bits corresponding to MC DCI1. The 6 feedback bits are sorted according to the time-frequency order of DCI. The first feedback bit corresponds to MC DCI0 and the last 5 feedback bits correspond to MC DCI1. In addition, the base station configures 5 potential feedback cells for the terminal: cell i, cell i+1, cell i+2, cell i+3, cell i+4; according to the cell index, the 5 feedback bits correspond to cell i, cell i+1, cell i+2, cell i+3, cell i+4 in sequence; since MC DCI1 schedules cell i, cell i+1, cell i+2, cell i+3, the feedback bits corresponding to cell i, cell i+1, cell i+2, cell i+3 are valid feedback bits, that is, the first 4 feedback bits among the 5 feedback bits are valid feedback bits. Then, in the sub-codebook of HARQ feedback, the first feedback bit is used to feedback PDSCH0 scheduled by MC DCIO; the second feedback bit to the fifth feedback bit are used to feedback PDSCH0, PDSCH1, PDSCH2, PDSCH3 scheduled by MC DCI1 respectively; and the sixth feedback bit is an invalid feedback bit.

### Method 2:

### 1) Number of HARQ bits:

In the HARQ feedback, the MC DCI shares a sub-codebook, and the bits of the sub-codebook are determined according to the number of the actually scheduled cells/PDSCHs/carriers/component carriers/subbands.

The number of bits of HARQ feedback is determined based on a first number; wherein the first number includes any one of the number of PDSCHs scheduled by MC DCI, the number of cells scheduled by MC DCI, the number of carriers scheduled by MC DCI, the number of component carriers scheduled by MC DCI, and the number of subbands scheduled by MC DCI.

The HARQ feedback is used to feedback PDSCH scheduled by at least one MC DCI, and the HARQ feedback includes a first sub-codebook shared by the at least one MC DCI, and the number of bits of the first sub-codebook is determined according to a second number; wherein the second number includes any one of the total number of PDSCHs scheduled by the at least one MC DCI, the total number of cells scheduled by the at least one MC DCI, the total number of carriers scheduled by the at least one MC DCI, the total number of component carriers scheduled by the at least one MC DCI, and the total number of subbands scheduled by the at least one MC DCI.

For example, HARQ feedback is used to feedback the first MC DCI and the second MC DCI, the first MC DCI schedules 4 PDSCHs on 4 cells, and the second MC DCI schedules 1 PDSCH on 1 cell. Then the HARQ feedback includes 5 bits, including 4 bits corresponding to the first MC DCI and 1 bit corresponding to the second MC DCI.

### 2) Feedback bit ordering of the sub-codebook in HARQ feedback:

The feedback bits of the MC DCI of the same scheduling case in the sub-codebook are sorted according to the time-frequency order, and the feedback bits of the MC DCI of different scheduling cases are sorted according to the number of scheduled cells.

The at least one MC DCI includes at least two MC DCIs; in the first sub-codebook, the feedback bits corresponding to the MC DCIs of the same scheduling case are sorted in time-frequency order; wherein the same scheduling case includes any one of the following being the same: the number of scheduled PDSCHs, the number of scheduled cells, the number of scheduled carriers, the number of scheduled component carriers, and the number of scheduled subbands.

The time-frequency order includes the time-frequency order of DCI or the time-frequency order of PDSCH.

The at least one MC DCI includes at least two MC DCIs; in the first sub-codebook, the feedback bits corresponding to the MC DCIs of different scheduling cases are sorted according to the number of scheduled cells/PDSCHs/carriers/component carriers/subbands; wherein the different scheduling cases include any one of the following being different: the number of scheduled PDSCHs, the number of scheduled cells, the number of scheduled carriers, the number of scheduled component carriers, and the number of scheduled subbands.

For example, the HARQ feedback is used to feedback the first MC DCI, the second MC DCI, and the third MC DCI. The first MC DCI schedules 4 PDSCHs on 4 cells, the second MC DCI schedules 1 PDSCH on 1 cell, and the third MC DCI schedules 4 PDSCHs on 4 cells. The first MC DCI and the third MC DCI are the same scheduling case, and the first MC DCI and the second MC DCI are different scheduling cases. The HARQ feedback includes 9 bits, and among the 9 feedback bits, the feedback bits of different scheduling cases are sorted according to the number of scheduled cells. The 1 feedback bit corresponding to the second MC DCI is the first feedback bit of the sub-codebook, and the 8 feedback bits corresponding to the first MC DCI and the third MC DCI are the last eight feedback bits of the sub-codebook. The last eight feedback bits in the sub-codebook are feedback bits corresponding to the same scheduling case, and the eight feedback bits are sorted in time-frequency order, for example, in time-frequency order of PDSCH. When the time-frequency order of PDSCH is PDSCH0, PDSCH1, PDSCH2 scheduled by the first MC DCI; PDSCH0, PDSCH1, PDSCH2, PDSCH3 scheduled by the second MC DCI; and PDSCH3 scheduled by the first MC DCI, the order of the last eight feedback bits is: the second feedback bit to the fourth feedback bit correspond to PDSCH0, PDSCH1, PDSCH2 scheduled by the first MC DCI respectively; the fifth feedback bit to the eighth feedback bit correspond to PDSCH0, PDSCH1, PDSCH2, PDSCH3 scheduled by the second MC DCI respectively; and the ninth feedback bit corresponds to PDSCH3 scheduled by the first MC DCI.

### 3) Sorting of sub-codebooks in HARQ feedback:

The first sub-codebook and the second sub-codebook in the HARQ feedback are sorted according to a second rule; wherein the second rule includes sorting according to at least one of the type of sub-codebook, cell index, time domain order of DCI, frequency domain order of DCI, time domain order of PDSCH, PDCCH monitoring occasion index, and DCI decoding success time order. Optionally, the second rule can also be referred to as a second predefined rule, that is, the second rule can be predefined by the protocol.

Optionally, when the HARQ feedback is only used to feed back MC DCI, at least one MC DCI shares one sub-codebook, and the HARQ feedback includes only one sub-codebook.

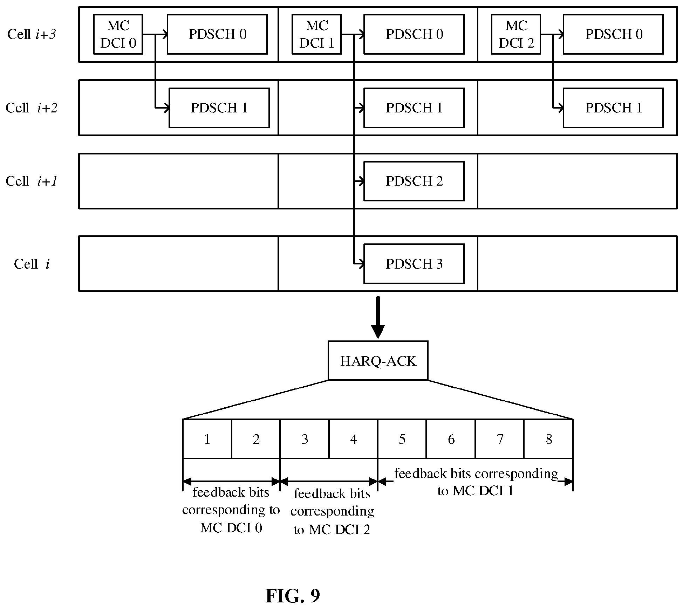

Based on the above description of method 2, the following example is given:
As shown in FIG. 9, the base station sends MC DCIO, MC DCI1 and MC DCI2 to the terminal. MC DCI0 schedules two PDSCHs: PDSCH0 and PDSCH1; MC DCI1 schedules four PDSCHs: PDSCH0, PDSCH1, PDSCH2 and PDSCH3; MC DCI2 schedules two PDSCHs: PDSCH0 and PDSCH1. Then the HARQ feedback includes a sub-codebook including 8 feedback bits, and the 8 feedback bits include 2 feedback bits corresponding to MC DCIO, 4 feedback bits corresponding to MC DCI1 and 2 feedback bits corresponding to MC DCI2. MC DCIs of different scheduling cases are sorted according to the number of scheduled cells, and MC DCI0 and MC DCI2 are ranked before MC DCI1; MC DCIs of the same scheduling case are sorted according to the time-frequency order, for example, according to the DCI time-frequency order, and the MC DCI0 is ranked before MC DCI2. In the sub-codebook of HARQ feedback, the first feedback bit to the second feedback bit are respectively used to feedback PDSCH0 and PDSCH1 scheduled by MC DCIO; the second feedback bit to the fourth feedback bit are respectively used to feedback PDSCH0 and PDSCH1 scheduled by MC DCI2; the fifth feedback bit to the eighth feedback bit are respectively used to feedback PDSCH0, PDSCH1, PDSCH2, and PDSCH3 scheduled by MC DCI1.

### Method 3:

### 1) Number of HARQ bits:

In the HARQ feedback, the MC DCI shares a sub-codebook, and the bits of the sub-codebook are determined according to the number of actually scheduled cells/PDSCHs/carriers/component carriers/subbands.

The number of bits of HARQ feedback is determined based on a first number; wherein the first number includes any one of the number of PDSCHs scheduled by MC DCI, the number of cells scheduled by MC DCI, the number of carriers scheduled by MC DCI, the number of component carriers scheduled by MC DCI, and the number of subbands scheduled by MC DCI.

The HARQ feedback is used to feedback PDSCH scheduled by at least one MC DCI, and the HARQ feedback includes a first sub-codebook shared by the at least one MC DCI, and the number of bits of the first sub-codebook is determined according to a second number; wherein the second number includes any one of the total number of PDSCHs scheduled by the at least one MC DCI, the total number of cells scheduled by the at least one MC DCI, the total number of carriers scheduled by the at least one MC DCI, the total number of component carriers scheduled by the at least one MC DCI, and the total number of subbands scheduled by the at least one MC DCI.

For example, HARQ feedback is used to feedback the first MC DCI and the second MC DCI, the first MC DCI schedules 4 PDSCHs on 4 cells, and the second MC DCI schedules 1 PDSCH on 1 cell. Then the HARQ feedback includes 5 bits, including 4 bits corresponding to the first MC DCI and 1 bit corresponding to the second MC DCI.

### 2) Feedback bit ordering of the sub-codebook in HARQ feedback:

The feedback bits in the sub-codebook are sorted in time-frequency order.
The feedback bits in the first sub-codebook shared by at least one MC DCI are sorted in a time-frequency order.

The time-frequency order includes the time-frequency order of DCI or the time-frequency order of PDSCH.

For example, HARQ feedback is used to feedback the first MC DCI, the second MC DCI and the third MC DCI, the first MC DCI schedules 4 PDSCHs on 4 cells, the second MC DCI schedules 1 PDSCH on 1 cell, and the third MC DCI schedules 4 PDSCHs on 4 cells. Then the HARQ feedback includes 9 bits, and the 9 feedback bits are sorted in time-frequency order, for example, in time-frequency order of DCI. Then the first four feedback bits in the sub-codebook are used to feedback the 4 PDSCHs scheduled by the first MC DCI, the fifth feedback bit is used to feedback the one PDSCH scheduled by the first MC DCI, and the sixth feedback bit to the ninth feedback bit are used to feedback the 4 PDSCHs scheduled by the third MC DCI.

### 3) Sorting of sub-codebooks in HARQ feedback:

The first sub-codebook and the second sub-codebook in the HARQ feedback are sorted according to a second rule; wherein the second rule includes sorting according to at least one of the type of sub-codebook, cell index, time domain order of DCI, frequency domain order of DCI, time domain order of PDSCH, PDCCH monitoring occasion index, and DCI decoding success time order. The first sub-codebook is a sub-codebook corresponding to M C DCI, and the second sub-codebook is a sub-codebook corresponding to SC DCI.

Optionally, when the HARQ feedback is only used to feed back MC DCI, at least one MC DCI shares one sub-codebook, and the HARQ feedback includes only one sub-codebook.

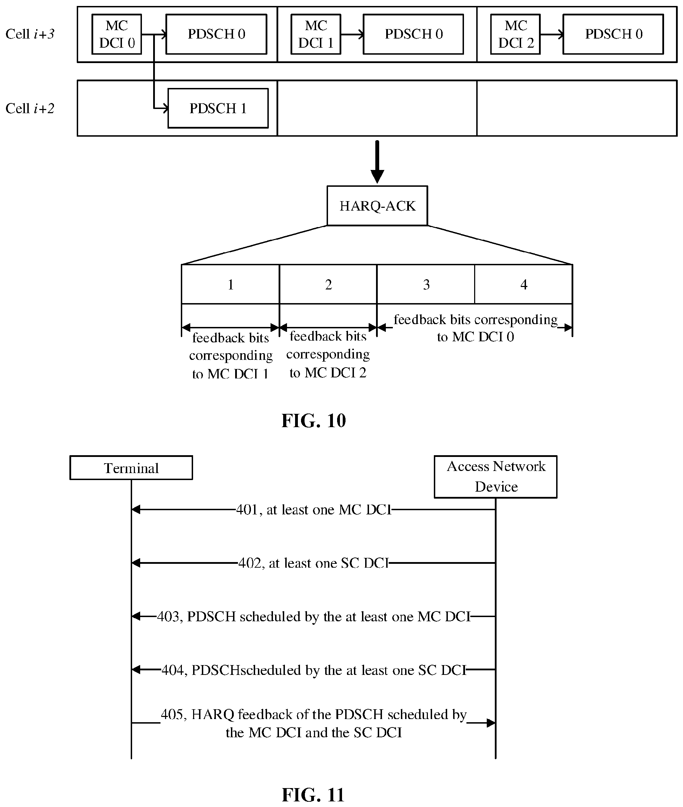

Based on the above description of method 3, the following example is given:
As shown in FIG. 10, the base station sends MC DCIO, MC DCI1 and MC DCI2 to the terminal. MC DCI0 schedules two PDSCHs: PDSCH0 and PDSCH1; MC DCI1 schedules four PDSCHs: PDSCH0, PDSCH1, PDSCH2 and PDSCH3; MC DCI2 schedules four PDSCHs: PDSCH0, PDSCH1, PDSCH2 and PDSCH3. Then the HARQ feedback includes a sub-codebook including 10 feedback bits, including 2 feedback bits corresponding to MC DCIO, 4 feedback bits corresponding to MC DCI1 and 4 feedback bits corresponding to MC DCI2. The feedback bits in the sub-codebook of HARQ feedback are sorted in time-frequency order. For example, they are sorted in DCI time-frequency order. Then, in the sub-codebook of HARQ feedback, the first feedback bit to the second feedback bit are respectively used to feedback PDSCH0 and PDSCH1 scheduled by MC DCIO; the third feedback bit to the sixth feedback bit are respectively used to feedback PDSCH0, PDSCH1, PDSCH2, and PDSCH3 scheduled by MC DCI1; the seventh feedback bit to the eighth feedback bit are respectively used to feedback PDSCH0 and PDSCH1 scheduled by MC DCI2.

### Method 4:

### 1) Number of HARQ bits:

The DCI of the same scheduling case in the HARQ feedback shares a sub-codebook, and the bits of the sub-codebook are determined according to the number of actually scheduled cells/PDSCHs/carriers/component carriers/subbands.

HARQ feedback is used to feedback the PDSCH corresponding to the DCI of at least two different scheduling cases; the HARQ feedback includes sub-codebooks corresponding to the DCI of at least two different scheduling cases, and the number of bits of each sub-codebook is determined according to a fifth number; wherein the fifth number includes at least one of the total number of PDSCHs scheduled by the DCI of the same scheduling case, the total number of cells scheduled by the DCI of the same scheduling case, the total number of carriers scheduled by the DCI of the same scheduling case, the total number of component carriers scheduled by the DCI of the same scheduling case, and the total number of subbands scheduled by the DCI of the same scheduling case; the different scheduling cases include any one of the following being different: the number of scheduled PDSCHs, the number of scheduled cells, the number of scheduled carriers, the number of scheduled component carriers, and the number of scheduled subbands; and the same scheduling case includes any one of the following being the same: the number of scheduled PDSCHs, the number of scheduled cells, the number of scheduled carriers, the number of scheduled component carriers, and the number of scheduled subbands.

For example, the HARQ feedback is used to feedback the first MC DCI, the second MC DCI, and the third MC DCI. The first MC DCI schedules 4 PDSCHs on 4 cells, the second MC DCI schedules 1 PDSCH on 1 cell, and the third MC DCI schedules 4 PDSCHs on 4 cells. The PDSCHs scheduled by the first MC DCI and the third MC DCI share a sub-codebook, and one sub-codebook is generated for the PDSCH scheduled by the second MC DCI, that is, the HARQ feedback includes two sub-codebooks. The sub-codebook shared by the PDSCHs scheduled by the first MC DCI and the third MC DCI includes 8 bits, and the sub-codebook generated by the PDSCH scheduled by the second MC DCI includes 1 bit, and the HARQ feedback includes 9 bits in total.

### 2) Feedback bit ordering of the sub-codebook in HARQ feedback:

The feedback bits corresponding to the DCI of the same scheduling case are sorted in time-frequency order.

The time-frequency order includes the time-frequency order of DCI or the time-frequency order of PDSCH.

For example, the HARQ feedback is used to feedback the first MC DCI, the second MC DCI, and the third MC DCI. The first MC DCI schedules 4 PDSCHs on 4 cells, the second MC DCI schedules 1 PDSCH on 1 cell, and the third MC DCI schedules 4 PDSCHs on 4 cells. Then the HARQ feedback includes two sub-codebooks, the first sub-codebook is used to feedback the first MC DCI and the third MC DCI, and the second sub-codebook is used to feedback the second MC DCI. The first sub-codebook includes 8 bits, and the 8 feedback bits are sorted in time-frequency order, for example, in time-frequency order of the PDSCH.

### 3) Sorting of sub-codebooks in HARQ feedback:

The sub-codebooks corresponding to the DCIs of different scheduling cases in the HARQ feedback are sorted according to the number of scheduled PDSCHs.

For example, the HARQ feedback is used to feedback the first MC DCI, the second MC DCI, and the third MC DCI. The first MC DCI schedules 4 PDSCHs on 4 cells, the second MC DCI schedules 1 PDSCH on 1 cell, and the third MC DCI schedules 4 PDSCHs on 4 cells. Then the HARQ feedback includes two sub-codebooks, the first sub-codebook is used to feedback the first MC DCI and the third MC DCI, and the second sub-codebook is used to feedback the second MC DCI. The first sub-codebook and the second sub-codebook are sorted according to the number of scheduled PDSCHs, the second sub-codebook is ranked in front, and the first sub-codebook is ranked behind, that is, the HARQ feedback includes the second sub-codebook and the first sub-codebook in sequence.

Based on the above description of method 4, the following example is given:
As shown in FIG. 10, the base station sends MC DCIO, MC DCI1 and MC DCI2 to the terminal. MC DCI0 schedules two PDSCHs: PDSCH0 and PDSCH1; MC DCI1 schedules one PDSCH: PDSCH0; and MC DCI2 schedules one PDSCH: PDSCH0. Then the HARQ feedback includes two sub-codebooks, the first sub-codebook corresponding to MC DCI1 and MC DCI2, the first sub-codebook includes 2 bits; the second sub-codebook corresponding to MC DCIO, the second sub-codebook includes 2 bits. The feedback bits in the second sub-codebook are sorted in time-frequency order, for example, in the time-frequency order of PDSCH, the PDSCH0 scheduled by MC DCI0 is ranked in front, and the PDSCH1 scheduled by MC DCI0 is ranked behind. The feedback bits in the first sub-codebook are sorted in time-frequency order, for example, in the time-frequency order of DCI, the MC DCI1 is ranked in front, and the MC DCI2 is ranked behind. The first sub-codebook and the second sub-codebook are sorted according to the number of cells scheduled by MC DCI, so the first sub-codebook is ranked in front and the second sub-codebook is ranked behind. Therefore, the first feedback bit and the second feedback bit of HARQ feedback are the first sub-codebook, and the third feedback bit and the fourth feedback bit are the second sub-codebook. The first feedback bit of HARQ feedback is used to feedback PDSCH0 of MC DCI1, the second feedback bit is used to feedback PDSCH0 of MC DCI2, and the third feedback bit to the fourth feedback bit are used to feedback PDSCH0 and PDSCH1 of MC DCI0.

In summary, in the method provided by this embodiment, when the base station schedules PDSCH for the terminal on multiple cells through MC DCI, the terminal can generate HARQ feedback of the PDSCH of the MC DCI according to the maximum number of scheduled cells N, or the terminal can generate the HARQ feedback of PDSCH of the MC DCI according to the number of cells actually scheduled by the MC DCI. The terminal can make multiple MC DCIs share one sub-codebook, or make MC DCIs of the same scheduling case share one sub-codebook. The terminal can sort the feedback bits in the sub-codebook in time-frequency order, and the terminal can also sort multiple sub-codebooks in HARQ feedback according to rules, etc.

The method provided in this embodiment provides a method for a terminal to generate HARQ feedback of a PDSCH scheduled by MC DCI, so that the terminal can feed back the reception status of the PDSCH scheduled by MC DCI to the base station.

Optionally, an exemplary embodiment of jointly feeding back HARQ feedback of PDSCH scheduled by MC DCI and SC DCI is provided.

FIG. 11 shows a flow chart of a HARQ feedback method provided by an exemplary embodiment of the present application. The HARQ feedback method can be performed by a terminal and an access network device. The method includes:
**Step 401:** The access network device sends at least one MC DCI to the terminal.

The terminal receives at least one MC DCI sent by the access network device.

The access network device sends the MC DCI to the terminal to schedule a PDSCH for the terminal in at least one cell.

Optionally, the MC DCI is carried on a PDCCH.

**Step 402:** The access network device sends at least one SC DCI to the terminal.

The terminal receives at least one SC DCI sent by the access network device.

The access network device sends the SC DCI to the terminal to schedule a PDSCH for the terminal in a cell.

Optionally, the SC DCI is carried on a PDCCH.

**Step 403:** The access network device sends the PDSCH scheduled by the at least one MC DCI to the terminal.

The terminal receives the PDSCH sent by the access network device according to the scheduling of the at least one MC DCI.

The number of PDSCHs is at least one. Optionally, one TB is carried by the at least one PDSCH. Optionally, one PDSCH carries one TB.

**Step 404:** The access network device sends the PDSCH scheduled by at least one SC DCI to the terminal.

The terminal receives the PDSCH sent by the access network device according to the scheduling of at least one SC DCI.

The number of PDSCHs is at least one. Optionally, one TB is carried by at least one PDSCH. Optionally, one PDSCH carries one TB.

It should be noted that the execution order of step 401, step 402, step 403, and step 404 is not limited, as long as step 401 is executed before step 403, and step 402 is executed before step 404.

**Step 405:** The terminal sends a HARQ feedback of the PDSCH scheduled by the MC DCI and the SC DCI to the access network device.

Optionally, the PDSCH scheduled by the at least one MC DCI and the at least one SC DCI shares one HARQ feedback.

The HARQ feedback is also used to feedback the PDSCH scheduled by at least one single-cell downlink control information SC DCI; the HARQ feedback also includes at least one sub-codebook corresponding to each SC DCI; or, the HARQ feedback also includes the same sub-codebook shared by the at least one SC DCI; or, the HARQ feedback also includes the same sub-codebook shared by the at least one SC DCI and the MC DCI that schedules a PDSCH.

The embodiments of the present application provide five methods for generating the HARQ feedback of the PDSCH scheduled by the MC DCI and the SC DCI:

### Method 1:

### 1) Number of HARQ bits:

The SC DCI and the MC DCI each independently generate a sub-codebook. That is, the at least one SC DCI shares a sub-codebook, and the at least one MC DCI shares a sub-codebook. Alternatively, each SC DCI generates a sub-codebook, and the at least one MC DCI shares a sub-codebook, wherein the number of bits of the sub-codebook corresponding to the MC DCI is determined according to the maximum number of the scheduled cells of the terminal, N, and N is a positive integer.

Alternatively, the DCI for scheduling one cell shares the same sub-codebook, and the DCI for scheduling multiple cells shares the same sub-codebook, and the number of bits of the sub-codebook corresponding to the DCI for scheduling multiple cells is determined according to the maximum number N of the scheduled cells of the terminal. It should be noted that the DCI for scheduling one cell includes the MC DCI for scheduling one cell and the SC DCI.

That is, the MC DCI for scheduling one cell and the SC DCI share the same sub-codebook, and the MC DCI for scheduling multiple cells share the same sub-codebook. The number of bits of the sub-codebook corresponding to the MC DCI for scheduling multiple cells is determined according to the maximum number N of the scheduled cells of the terminal, and the number of bits of the sub-codebook corresponding to the MC DCI for scheduling one cell and the SC DCI is 1.

N is the maximum number of the scheduled cells of the terminal, that is, the terminal supports at most scheduling N PDSCHs on N cells/carriers/component carriers/subbands by an MC DCI.

The method for determining N includes at least one of the following:
· N is predefined by the protocol;
· N is configured to the terminal by the access network device through RRC signaling;
· N is indicated to the terminal by the access network device through dynamic signaling; and
· N is reported by the terminal to the access network device.

The HARQ feedback is used to feedback the PDSCH scheduled by at least one MC DCI and at least one SC DCI. The HARQ feedback includes: a sub-codebook shared by the at least one MC DCI; and a sub-codebook corresponding to the at least one SC DCI, or a same sub-codebook shared by the at least one SC DCI.

The sub-codebook corresponding to the MC DCI includes at least one bit corresponding to the MC DCI, and one MC DCI corresponds to N bits or one bit, where N is the maximum number of the scheduled cells of the terminal.

For example, the HARQ feedback is used to feedback the PDSCHs scheduled by x MC DCIs and the PDSCHs scheduled by y SC DCIs. Then the HARQ feedback includes a first sub-codebook shared by the x MC DCIs and a second sub-codebook shared by the y SC DCIs. The first sub-codebook includes a maximum of x*N bits (i.e., each MC DCI corresponds to N bits), and a minimum of x bits (i.e., each MC DCI corresponds to 1 bit). Of course, it is not excluded that part of the x MC DCIs corresponds to N bits and part of the MC DCIs corresponds to 1 bit. The second sub-codebook has y bits (i.e., each SC DCI corresponds to one bit).

Optionally, the number of bits of the sub-codebook corresponding to the MC DCI is determined in one of the following two modes:
Mode (1): When the MC DCI schedules one PDSCH, the MC DCI corresponds to one bit in the sub-codebook; and when the MC DCI schedules multiple PDSCHs, the MC DCI corresponds to N bits in the sub-codebook.

That is, at least one MC DCI includes: a first MC DCI; when the first MC DCI schedules one PDSCH, the first MC DCI corresponds to one bit in the first sub-codebook; and when the first MC DCI schedules multiple PDSCHs, the first MC DCI corresponds to N bits in the first sub-codebook, where N is the maximum number of scheduled cells of the terminal.

Mode (2): Each MC DCI corresponds to N bits in the sub-codebook.

That is, one MC DCI corresponds to N bits, where N is the maximum number of the scheduled cells of the terminal.

### 2) Feedback bit ordering of the sub-codebook in HARQ feedback:

The feedback bits generated by the same type of DCI are sorted in time-frequency order, that is, the feedback bits generated by the MC DCI are sorted in time-frequency order, and the feedback bits generated by the SC DCI are sorted in time-frequency order. The sub-codebooks generated by different types of DCI are sorted according to a rule.

The feedback bits of each sub-codebook in the HARQ feedback are sorted in time-frequency order.

For example, the HARQ feedback includes a first sub-codebook corresponding to the MC DCI and a second sub-codebook corresponding to the SC DCI, the feedback bits in the first sub-codebook are sorted in time-frequency order, and the feedback bits in the second sub-codebook are sorted in time-frequency order.

Optionally, the time-frequency order may be the time-frequency order of DCI or the time-frequency order of PDSCH.

### 3) Sorting of sub-codebooks in HARQ feedback:

The sub-codebooks in the HARQ feedback are sorted according to a first rule; wherein the first rule includes sorting according to at least one of the type of sub-codebook, cell index, time domain order of DCI, frequency domain order of DCI, time domain order of PDSCH, PDCCH monitoring occasion index, and DCI decoding success time order.

For example, the HARQ feedback includes a first sub-codebook corresponding to the MC DCI and a second sub-codebook corresponding to the SC DCI, and the first sub-codebook and the second sub-codebook are sorted according to the sub-first rule.

In the embodiment, the first rule can be based on the type of sub-codebook, for example, the sub-codebook corresponding to the SC DCI is ranked in front, and the sub-codebook corresponding to the MC DCI is ranked behind, then the second sub-codebook is ranked in front and the first sub-codebook is ranked behind, and vice versa.

The first rule may also be based on the cell index. For example, if the cell index corresponding to the MC DCI is smaller, and the cell index corresponding to the SC DCI is larger, the sub-codebook corresponding to the MC DCI is ranked in front, and the sub-codebook corresponding to the SC DCI is ranked behind, or vice versa.

The first rule may also be sorting according to the time domain order of the DCI, that is, sorting according to the time domain order of the MC DCI and the time domain order of the SC DCI.

The first rule may also be sorting according to the frequency domain order of the DCI, that is, sorting according to the frequency domain order of the MC DCI and the frequency domain order of the SC DCI.

The first rule can also be sorting according to the time domain order of the PDSCH scheduled by the DCI. When the time domain of the PDSCH scheduled by the MC DCI is earlier and the time domain of the PDSCH scheduled by the SC DCI is later, the sub-codebook corresponding to the MC DCI is ranked in front and the sub-codebook corresponding to the SC DCI is ranked behind, and vice versa.

The first rule may also be sorting according to the PDCCH monitoring occasion index of the DCI, that is, sorting according to the PDCCH monitoring occasion index of the MC DCI and the PDCCH monitoring occasion index of the SC DCI.

The first rule may also be sorting according to the order of DCI decoding success time, that is, sorting according to the DCI decoding success time of the MC DCI and the DCI decoding success time of the MC DCI. For example, the terminal receives the MC DCI at the first moment, receives the SC DCI at the second moment, successfully decodes the SC DCI at the third moment, and successfully decodes the MC DCI at the fourth moment. If the third moment is earlier than the fourth moment, the sub-codebook corresponding to the SC DCI is ranked in front, and the sub-codebook corresponding to the MC DCI is ranked behind, and vice versa.

### 4) Determination of valid feedback bits:

Optionally, when one MC DCI corresponds to N bits in the sub-codebook, if the number of PDSCHs actually scheduled by the MC DCI is less than N, it is necessary to determine a valid feedback bit among the N bits.

The at least one MC DCI includes a second MC DCI; when the number of bits corresponding to the second MC DCI in the sub-codebook is greater than the number of PDSCHs/number of cells/number of carriers/number of component carriers/number of subbands actually scheduled by the second MC DCI, the sub-codebook includes the valid feedback bit.

That is, when the number of bits corresponding to the second MC DCI in the sub-codebook is greater than the number of PDSCHs actually scheduled by the second MC DCI, the terminal determines the valid feedback bit corresponding to the second MC DCI in the sub-codebook.

The embodiment of the present application provides six modes for determining the valid feedback bit. The six modes for determining the valid feedback bit can refer to the description in the embodiment shown in FIG. 6.

In an optional embodiment, the base station sends at least one DCI signaling to the UE, and the UE can receive the DCI signaling sent by the base station. The base station can schedule at least one PDSCH on at least one cell/carrier/subband for the UE through one DCI signaling. For example, the base station sends a DCI to the UE, and the DCI includes scheduling information of 4 cells. After the UE successfully decodes the DCI, it receives the PDSCH on the time-frequency resources of the corresponding 4 cells. One TB is carried by at least one PDSCH. Optionally, one PDSCH carries one TB.

Optionally, there are at least two types of DCI, the first DCI schedules only one PDSCH on one cell, and the second DCI schedules two PDSCHs on at least two cells. Optionally, the base station schedules the PDSCH for the UE through the second DCI, and each cell includes one PDSCH in the scheduling time window. The scheduling time window includes at least one of the following: one or more time domain symbols, one or more mini slots, one or more slots, half a radio frame, and one or more radio frames.

In an embodiment, different types of DCI may be in the same DCI format, or in different DCI formats.

The base station sends the DCI to the UE in UE-specific signaling to schedule the PDSCH. The sent DCI includes at least one of the following: a first DCI, a second DCI, etc. In one feedback cycle, the UE receives and decodes the DCI and feeds back the HARQ-ACK feedback to the base station. When the UE generates the HARQ-ACK feedback codebook, the UE independently generates sub-codebooks for the DCI scheduling multiple cells and arranges them in a certain order.

### The specific method is as follows:

The UE supports the base station to send the first DCI and the second DCI for it. When the UE feeds back the codebook, the UE generates a first sub-codebook for the first DCI and a second sub-codebook for the second DCI. The UE generates one bit for each first DCI and N bits for each second DCI, where N is the maximum number of the scheduled cells of the UE. N is determined by at least one of the following methods: predefined by the protocol, configured by the base station through RRC signaling, indicated by the base station through dynamic signaling, and the UE reporting the N value to the base station.

The sub-codebooks of the same type of DCI are sorted by firstly the time domain and then the frequency domain, or by firstly the frequency domain and then the time domain.

The sub-codebooks of different types of DCI are sorted in the order of the first DCI in front and the second DCI behind, or the order of the second DCI in front and the first DCI behind.

When sorting in the frequency domain, the cells may be sorted in descending order or in ascending order according to the cell index. When sorting in the time domain, the cells may be sorted in the order of DCI arrival or in the order of DCI decoding.

In an optional embodiment, the base station sends at least one DCI signaling to the UE, and the UE can receive the DCI signaling sent by the base station. The base station can schedule at least one PDSCH on at least one cell/carrier/subband for the UE through one DCI signaling. For example, the base station sends a DCI to the UE, and the DCI includes scheduling information of 4 cells. After the UE successfully decodes the DCI, it receives the PDSCH on the time-frequency resources of the corresponding 4 cells. One TB is carried by at least one PDSCH. Optionally, one PDSCH carries one TB.

In one feedback cycle, the UE receives and decodes the DCI, and feeds back the HARQ-ACK feedback to the base station. When the UE generates the HARQ-ACK feedback codebook, the UE independently generates a sub-codebook for the DCI that schedules multiple cells, and N bits are generated for each DCI, where N is the maximum number of scheduled cells of the UE. N is determined by at least one of the following methods: protocol pre-defined, base station configuration through RRC signaling, base station indication through dynamic signaling, and UE reporting the N value to the base station. When the number of cells actually scheduled by the base station is less than N, the method for confirming the valid value in the N bits includes at least one of the following:

### Method 1:

When the number of bits of the generated codebook is N and the number of cells actually scheduled is n, the first n bits among the N bits are valid bits. The first bit of the n bits corresponds to the PDSCH of the cell with the smallest index, the second bit corresponds to the PDSCH of the second smallest cell, and so on.

### Method 2:

When the number of bits of the generated codebook is N and the number of cells actually scheduled is n, the first n bits among the N bits are valid bits. The first bit of the n bits corresponds to the PDSCH of the cell with the largest index, the second bit corresponds to the PDSCH of the cell with the second largest index, and so on.

### Method 3:

When the number of bits of the generated codebook is N and the number of cells actually scheduled is n, the last n bits among the N bits are valid bits. The first bit of the n bits corresponds to the PDSCH of the cell with the smallest index, the second bit corresponds to the PDSCH of the second smallest index, and so on.

### Method 4:

When the number of bits of the generated codebook is N and the number of cells actually scheduled is n, the last n bits of among N bits are valid bits. The first bit of the n bits corresponds to the PDSCH of the cell with the largest index, the second bit corresponds to the PDSCH of the cell with the second largest index, and so on.

### Method 5:

When the number of bits of the generated codebook is N and the number of cells actually scheduled is n, n bits among the N bits are valid bits. The number of potential scheduled cells configured by the base station for the UE is N. The first bit of the N bits corresponds to the cell with the smallest index among the N cells, the second bit of the N bits corresponds to the cell with the second smallest index among the N cells, and so on. The valid bits correspond to the scheduled cells one-to-one. For example, if the cell with the second smallest index among the N cells is scheduled, the second bit of the N bits is valid.

### Method 6:

When the number of bits of the generated codebook is N and the number of cells actually scheduled is n, n bits among the N bits are valid bits. The number of potential scheduled cells configured by the base station for the UE is N. The first bit of the N bits corresponds to the cell with the largest index among the N cells, the second bit of the N bits corresponds to the cell with the second largest index among the N cells, and so on. The valid bits correspond to the scheduled cells one-to-one. For example, if the cell with the second largest index among the N cells is scheduled, the second bit of the N bits is valid.

Based on the above description of method 1, the following example is given:
The number of bits in the sub-codebook corresponding to the MC DCI in the HARQ feedback is N bits for each MC DCI. The feedback bits in each sub-codebook are sorted in the time domain order and then the frequency domain order according to the time-frequency order of the DCI. The sub-codebooks are sorted in the time domain order of the DCI. When the number of bits in the sub-codebook corresponding to the MC DCI is greater than the number of cells actually scheduled, the first n bits are valid feedback bits.

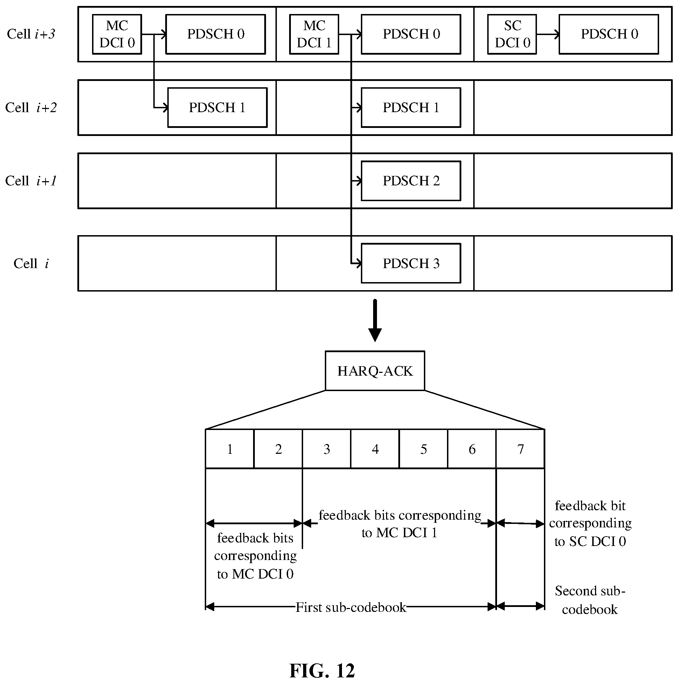

As shown in FIG. 12, the base station sends the MC DCIO, MC DCI1, and SC DCI0 to the terminal. The MC DCI0 schedules two PDSCHs: PDSCH0 and PDSCH1; the MC DCI1 schedules four PDSCHs: PDSCH0, PDSCH1, PDSCH2, and PDSCH3; and the SC DCI schedules one PDSCH: PDSCH0. Assuming that the maximum number of the scheduled cells of the terminal is 5, that is, N is 5. The HARQ feedback includes the first sub-codebook corresponding to the MC DCI and the second sub-codebook corresponding to the SC DCI. The first sub-codebook includes 10 feedback bits, including 5 feedback bits corresponding to the MC DCI0 and 5 feedback bits corresponding to the MC DCI1. The 10 feedback bits are sorted in the time-frequency order of MC DCI0 and MC DCI1, with the first 5 feedback bits corresponding to the MC DCI0 and the last 5 feedback bits corresponding to the MC DCI1. Moreover, the first two feedback bits of the first five feedback bits are valid feedback bits, and the first four feedback bits of the last five feedback bits are valid feedback bits. The second sub-codebook includes one feedback bit corresponding to PDSCH0 scheduled by the SC DCI0. Then in the HARQ feedback, the first feedback bit is the second sub-codebook, and the first feedback bit is used to feedback the PDSCH0 scheduled by the SC DCIO; the second feedback bit to the eleventh feedback bit are the first sub-codebook, and the second feedback bit to the third feedback bit are used to feedback the PDSCH0 and PDSCH1 scheduled by the MC DCIO; the fourth feedback bit to the sixth feedback bit are invalid feedback bits (do not carry feedback information); the seventh feedback bit to the tenth feedback bit are used to feedback the PDSCH0, PDSCH1, PDSCH2, and PDSCH3 scheduled by the MC DCI1, respectively; and the eleventh feedback bit is an invalid feedback bit.

### Method 2:

### 1) Number of HARQ bits:

In the HARQ feedback, the MC DCI shares one sub-codebook and the SC DCI shares one sub-codebook, and the bits of the sub-codebook are determined according to the number of cells/PDSCHs/carriers/component carriers/subbands actually scheduled.

The HARQ feedback is used to feedback the PDSCH scheduled by at least one MC DCI, and the HARQ feedback includes a first sub-codebook shared by the at least one MC DCI, and the number of bits of the first sub-codebook is determined according to the second number; wherein the second number includes any one of the total number of PDSCHs scheduled by the at least one MC DCI, the total number of cells scheduled by the at least one MC DCI, the total number of carriers scheduled by the at least one MC DCI, the total number of component carriers scheduled by the at least one MC DCI, and the total number of subbands scheduled by the at least one MC DCI.

The HARQ feedback is also used to feedback the PDSCH scheduled by at least one SC DCI, and the HARQ feedback includes a second sub-codebook shared by at least one the SC DCI, and the number of bits of the second sub-codebook is determined according to a third number; wherein the third number includes any one of the total number of PDSCHs scheduled by the at least one SC DCI, the total number of cells scheduled by the at least one SC DCI, the total number of carriers scheduled by the at least one SC DCI, the total number of component carriers scheduled by the at least one SC DCI, and the total number of subbands scheduled by the at least one SC DCI.

For example, the HARQ feedback is used to feedback the first MC DCI, the second MC DCI and the first SC DCI. The first MC DCI schedules 4 PDSCHs on 4 cells, the second MC DCI schedules 1 PDSCH on 1 cell, and the first SC DCI schedules 1 PDSCH on 1 cell. Then the HARQ feedback includes the first sub-codebook corresponding to the MC DCI and the second sub-codebook corresponding to the SC DCI. The first sub-codebook includes 5 bits, and the second sub-codebook includes 1 bit. The 5 bits in the first sub-codebook include 4 bits corresponding to the first MC DCI and 1 bit corresponding to the second MC DCI. The 1 bit in the second sub-codebook is the 1 bit corresponding to the first SC DCI.

### 2) Feedback bit ordering of the sub-codebook in HARQ feedback:

In the sub-codebook corresponding to the MC DCI, the feedback bits of the MC DCI of the same scheduling case are sorted in time-frequency order, and the feedback bits of the MC DCI of different scheduling cases are sorted according to the number of scheduled cells.

The feedback bits in the sub-codebook corresponding to the SC DCI are sorted in time-frequency order.

The at least one MC DCI includes at least two MC DCIs; in the first sub-codebook, the feedback bits corresponding to the MC DCIs of the same scheduling case are sorted in time-frequency order; wherein the same scheduling case includes any one of the following being the same: the number of scheduled PDSCHs, the number of scheduled cells, the number of scheduled carriers, the number of scheduled component carriers, and same number of scheduled subbands.

The time-frequency order includes the time-frequency order of the DCI or the time-frequency order of the PDSCH.

The at least one MC DCI includes at least two MC DCIs; in the first sub-codebook, the feedback bits corresponding to the MC DCIs of different scheduling cases are sorted according to the number of scheduled cells/PDSCHs/carriers/component carriers/subbands; wherein the different scheduling cases include any one of the following being different: the number of scheduled PDSCHs, the number of scheduled cells, the number of scheduled carriers, the number of scheduled component carriers, and the number of scheduled subbands.

For example, the HARQ feedback is used to feedback the first MC DCI, the second MC DCI, the first SC DCI, and the second SC DCI. The first MC DCI schedules 4 PDSCHs on 4 cells, the second MC DCI schedules 4 PDSCHs on 4 cells, the first SC DCI schedules 1 PDSCH on 1 cell, and the second SC DCI schedules 1 PDSCH on 1 cell. Then the first MC DCI and the second MC DCI have the same scheduling case. The first MC DCI and the second MC DCI share the first sub-codebook, and the first sub-codebook includes 8 bits. The first SC DCI and the second SC DCI share the second sub-codebook, and the second sub-codebook includes 2 bits. In the first sub-codebook, since the two MC DCIs have the same scheduling case, the eight feedback bits in the first sub-codebook are sorted in time-frequency order. The two feedback bits in the second sub-codebook are also sorted in time-frequency order, for example, in the time domain order of the SC DCI. If the terminal receives the first SC DCI first and then receives the second SC DCI, the first feedback bit in the second sub-codebook corresponds to the first SC DCI, and the second feedback bit corresponds to the second SC DCI.

### 3) Sorting of sub-codebooks in HARQ feedback:

The first sub-codebook and the second sub-codebook in the HARQ feedback are sorted according to the second rule; wherein the second rule includes sorting according to at least one of the type of sub-codebook, the cell index, the time domain order of DCI, the frequency domain order of DCI, the time domain order of PDSCH, the PDCCH monitoring occasion index, and the DCI decoding success time order. The first sub-codebook is the sub-codebook corresponding to the MC DCI, and the second sub-codebook is the sub-codebook corresponding to the SC DCI. Optionally, the second rule can refer to the above explanation of the first rule. The first rule and the second rule can be the same or different.

In an optional embodiment, the base station sends at least one downlink control information signaling to the UE, and the UE can receive the DCI signaling sent by the base station. The base station can schedule at least one PDSCH on at least one cell/carrier/subband for the UE through the DCI signaling. For example, the base station sends a DCI to the UE, and the DCI contains scheduling information of 4 cells. After the UE successfully decodes the DCI, it receives the PDSCH on the time-frequency resources of the corresponding 4 cells. One transport block is carried by at least one PDSCH, and optionally, one PDSCH carries one TB.

In an embodiment, there are at least two types of DCI, for example, there are a first DCI and a second DCI in the network. The first DCI schedules only one PDSCH on one cell, and the second DCI schedules two PDSCHs on at least two cells. Optionally, the base station schedules PDSCH for the UE through at least one of the first and second DCIs, and each cell contains at least one PDSCH in the scheduling time window. The composition of the scheduling time window includes at least one of the following: one or more time domain symbols, one or more mini slots, one or more slots, half a radio frame, and one or more radio frames.

In an embodiment, different types of DCI may be in the same DCI format, or in different DCI formats.

The base station sends the DCI to the UE in a UE-specific signaling to schedule the PDSCH, and the sent DCI includes at least one of the following: the first DCI and the second DCI, etc. In one feedback cycle, the UE receives and decodes the DCI, and feeds back HARQ-ACK information to the base station. When the UE feeds back the HARQ-ACK information and generates the HARQ-ACK feedback codebook, the UE independently generates sub-codebooks for the DCI scheduling different numbers of cells, and different sub-codebooks are arranged in a certain order.

The specific method is as follows:
The UE supports the base station to send the first DCI and the second DCI for the UE. When the UE feeds back the codebook, the UE generates a first sub-codebook for the first DCI and a second sub-codebook for the second DCI. The UE generates one feedback bit for each first DCI and n feedback bits for each second DCI, where n is the number of cells scheduled by the second DCI.

The feedback bits generated according to the first DCI are sorted in the order of time domain first and then frequency domain, or in the order of frequency domain first and then time domain. The feedback bits for the same number of scheduled cells in the second DCI are sorted in the order of time domain first and then frequency domain, or in the order of frequency domain first and then time domain. The feedback bits for the different numbers of scheduled cells in the second DCI are sorted in the order of the number of scheduled cells from small to large, or from large to small.

The sub-codebooks of different types of DCI are sorted in the order of the first DCI first and the second DCI later, or the order of the second DCI first and the first DCI later.

When sorting in the frequency domain, the cells may be sorted in descending order or in ascending order according to cell index. When sorting in the time domain, the cells may be sorted in the order of DCI arrival time or DCI decoding success time.

Based on the above description of method 2, the following example is given:
As shown in FIG. 12, the base station sends the MC DCIO, MC DCI1 and SC DCI0 to the terminal. The MC DCI0 schedules two PDSCHs: PDSCH0 and PDSCH1; the MC DCI1 schedules four PDSCHs: PDSCH0, PDSCH1, PDSCH2 and PDSCH3; the SC DCI2 schedules one PDSCH: PDSCH0. Then the HARQ feedback includes the first sub-codebook corresponding to the MC DCI and the second sub-codebook corresponding to the SC DCI. The first sub-codebook includes 6 feedback bits, including 2 feedback bits corresponding to the MC DCI0 and 4 feedback bits corresponding to the MC DCI1. The MC DCIs of different scheduling cases are sorted according to the number of scheduled cells, and the MC DCI0 and MC DCI2 are ranked before the MC DCI1. Then in the first sub-codebook, the first feedback bit to the second feedback bit are respectively used to feedback PDSCH0 and PDSCH1 scheduled by the MC DCIO; the second feedback bit to the sixth feedback bit are respectively used to feedback PDSCH0, PDSCH1, PDSCH1, and PDSCH2 scheduled by the MC DCI1. The first sub-codebook and the second sub-codebook are sorted according to the time domain order of the DCI, that is, the first sub-codebook is ranked in front and the second sub-codebook is ranked behind. The seventh sub-codebook of HARQ feedback is the second sub-codebook, and the second sub-codebook is used to feedback the PDSCH0 scheduled by the SC DCI0.

### Method 3:

### 1) Number of HARQ bits:

In the HARQ feedback, the MC DCI shares one sub-codebook and the SC DCI shares one sub-codebook, and the bits of the sub-codebook are determined according to the number of the cells/PDSCHs/carriers/component carriers/subbands actually scheduled.

The HARQ feedback is used to feedback PDSCH scheduled by at least one MC DCI, and the HARQ feedback includes a first sub-codebook shared by the at least one MC DCI, and the number of bits of the first sub-codebook is determined according to the second number; wherein the second number includes any one of the total number of PDSCHs scheduled by the at least one MC DCI, the total number of cells scheduled by the at least one MC DCI, the total number of carriers scheduled by the at least one MC DCI, the total number of component carriers scheduled by the at least one MC DCI, and the total number of subbands scheduled by the at least one MC DCI.

The HARQ feedback is also used to feedback the PDSCH scheduled by at least one SC DCI, and the HARQ feedback includes a second sub-codebook shared by the at least one SC DCI, and the number of bits of the second sub-codebook is determined according to a third number; wherein the third number includes any one of the total number of PDSCHs scheduled by the at least one SC DCI, the total number of cells scheduled by the at least one SC DCI, the total number of carriers scheduled by the at least one SC DCI, the total number of component carriers scheduled by the at least one SC DCI, and the total number of subbands scheduled by the at least one SC DCI.

### 2) Feedback bit ordering of the sub-codebook in HARQ feedback:

The feedback bits in the sub-codebook are sorted in time-frequency order.
That is, the feedback bits in the first sub-codebook corresponding to the MC DCI are sorted in time-frequency order, and the feedback bits in the second sub-codebook corresponding to the SC DCI are sorted in time-frequency order.

The time-frequency order includes the time-frequency order of DCI or the time-frequency order of PDSCH.

For example, the HARQ feedback is used to feedback the first MC DCI, the second MC DCI, the first SC DCI, and the second SC DCI. The first MC DCI schedules 4 PDSCHs on 4 cells, the second MC DCI schedules 1 PDSCH on 1 cell, the first SC DCI schedules 1 PDSCH on 1 cell, and the second SC DCI schedules 1 PDSCH on 1 cell. Then the HARQ feedback includes the first sub-codebook corresponding to the first MC DCI and the second MC DCI, and the second sub-codebook corresponding to the first SC DCI and the second SC DCI. The first sub-codebook includes 5 bits, and the 5 feedback bits are sorted in time-frequency order, for example, in time-frequency order of DCI. Then the first four feedback bits in the first sub-codebook are used to feedback the 4 PDSCHs scheduled by the first MC DCI, and the fifth feedback bit is used to feedback the one PDSCH scheduled by the first MC DCI. The second sub-codebook includes 2 bits, and the 2 feedback bits are sorted in time-frequency order, for example, in time-frequency order of PDSCH. The first feedback bit in the second sub-codebook is used to feedback the PDSCH of the first SC DCI, and the second feedback bit in the second sub-codebook is used to feedback the PDSCH of the second SC DCI.

### 3) Sorting of sub-codebooks in HARQ feedback:

The first sub-codebook and the second sub-codebook in the HARQ feedback are sorted according to a second rule; wherein the second rule includes sorting according to at least one of the type of sub-codebook, cell index, time domain order of DCI, frequency domain order of DCI, time domain order of PDSCH, PDCCH monitoring occasion index, and DCI decoding success time order. The first sub-codebook is a sub-codebook corresponding to the MC DCI, and the second sub-codebook is a sub-codebook corresponding to the SC DCI.

In an optional embodiment, the base station sends at least one DCI signaling to the UE, and the UE can receive the DCI signaling sent by the base station. The base station can schedule at least one PDSCH on at least one cell/carrier/subband for the UE through a DCI signaling. For example, the base station sends a DCI to the UE, and the DCI includes scheduling information of 4 cells. After the UE successfully decodes the DCI, it receives the PDSCH on the time-frequency resources of the corresponding 4 cells. One TB is carried by at least one PDSCH. Optionally, one PDSCH carries one TB.

Optionally, there are at least two types of DCI, for example, there are a first DCI and a second DCI in the network. The first DCI schedules only one PDSCH on one cell, and the second DCI schedules two PDSCHs on at least two cells. Optionally, the base station schedules the PDSCH for the UE through at least one of the first and second DCIs, and each cell contains at least one PDSCH in the scheduling time window. The scheduling time window includes at least one of the following: one or more time domain symbols, one or more mini slots, one or more slots, half a radio frame, and one or more radio frames.

In an embodiment, different types of DCI may be in the same DCI format, or in different DCI formats.

The base station sends the DCI to the UE in a UE-specific signaling to schedule the PDSCH. The sent DCI includes at least one of the following: the first DCI and the second DCI. In a feedback cycle, the UE receives and decodes the DCI and feeds back HARQ-ACK information to the base station. When the UE feeds back the HARQ-ACK information and generates the HARQ-ACK feedback codebook, the UE independently generates sub-codebooks for scheduling DCI of different numbers of cells, and the different sub-codebooks are arranged in a certain order. The specific method is as follows:

The UE supports the base station to send the first DCI and the second DCI for the UE. When the UE feeds back the codebook, the UE generates a first sub-codebook for the first DCI and a second sub-codebook for the second DCI. The UE generates one bit for each first DCI and n bits for each second DCI, where n is the number of cells scheduled by the second DCI.

The feedback bits generated for the same type of DCI are sorted in the order of time domain first and then frequency domain, or in the order of frequency domain first and then time domain.

The sub-codebooks for different types of DCI are sorted in the order of the first DCI first and the second DCI later, or the order of the second DCI first and the first DCI later.

Sorting by the frequency domain, optionally, sorts by cell index according to ascending or descending order. Sorting by time domain, optionally, sorts by DCI arrival time order or DCI decoding time order.

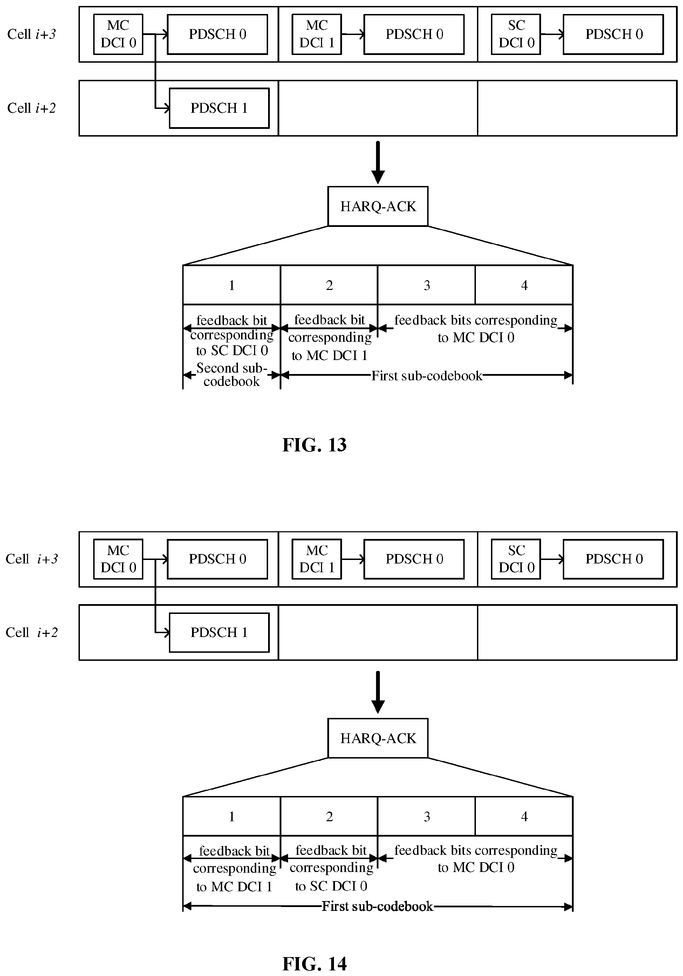

Based on the above description of method 3, the following example is given:
As shown in FIG. 13, the base station sends the MC DCIO, MC DCI1 and SC DCIO to the terminal. The MC DCIO schedules two PDSCHs: PDSCHO and PDSCH1; the MC DCI1 schedules one PDSCH: PDSCHO; and the SC DCI2 schedules one PDSCH: PDSCHO. Then the HARQ feedback includes the first sub-codebook corresponding to the MC DCI and the second sub-codebook corresponding to SC DCI. The first sub-codebook includes 3 feedback bits, including 2 feedback bits corresponding to the MC DCIO and 1 feedback bit corresponding to the MC DCI1. The feedback bits in the first sub-codebook are sorted in time-frequency order. The second sub-codebook includes 1 feedback bit, and the 1 feedback bit is used to feedback the PDSCHO scheduled by the SC DCIO. The first sub-codebook and the second sub-codebook are arranged in the order of the SC DCI first and then the MC DCI, and the first feedback bit of HARQ feedback is used to feedback the PDSCHO scheduled by the SC DCIO; the second feedback bit of the HARQ feedback is used to feedback the PDSCHO scheduled by the MC DCI1; and the third feedback bit and the fourth feedback bit of the HARQ feedback are used to feedback the PDSCHO and PDSCH1 scheduled by the MC DCIO.

### Method 4:

### 1) Number of HARQ bits:

In the HARQ feedback, all DCIs share one sub-codebook, and the bits of the sub-codebook are determined according to the number of actually scheduled cells/PDSCHs/carriers/component carriers/subbands.

The HARQ feedback is used to feedback the PDSCH scheduled by at least one MC DCI and at least one SC DCI, and the HARQ feedback includes a third sub-codebook shared by the at least one MC DCI and the at least one SC DCI, and the number of bits of the third sub-codebook is determined according to a fourth number; wherein the fourth number includes any one of the total number of the PDSCHs scheduled by the at least one MC DCI and the at least one SC DCI, the total number of cells scheduled by the at least one MC DCI and the at least one SC DCI, the total number of carriers scheduled by the at least one MC DCI and the at least one SC DCI, the total number of component carriers scheduled by the at least one MC DCI and the at least one SC DCI, and the total number of subbands scheduled by the at least one MC DCI and the at least one SC DCI.

For example, the HARQ feedback is used to feedback the first MC DCI, the second MC DCI, the first SC DCI, and the second SC DCI, the first MC DCI, the second MC DCI, a first sub-codebook is jointly generated for the first SC DCI, and the second SC DCI, and the HARQ feedback includes the first sub-codebook. When the first MC DCI schedules 4 PDSCHs and the second MC DCI schedules 2 PDSCHs, the first sub-codebook includes 8 bits.

Alternatively, in the HARQ feedback, the DCI for scheduling one PDSCH shares one sub-codebook, and the DCI for scheduling multiple PDSCHs shares one sub-codebook. The bits of the sub-codebook are determined according to the number of cells/PDSCHs/carriers/component carriers/subbands actually scheduled.

In the case where there is an MC DCI for scheduling one PDSCH in the at least one MC DCI, the HARQ feedback includes a third sub-codebook shared by the MC DCI for scheduling one PDSCH and the at least one SC DCI; in the case where there is an MC DCI for scheduling multiple PDSCHs in the at least one MC DCI, the HARQ feedback includes a fourth sub-codebook corresponding to the MC DCI for scheduling multiple PDSCHs, and the HARQ feedback also includes a fifth sub-codebook shared by the at least one SC DCI.

For example, the HARQ feedback is used to feedback the first MC DCI, the second MC DCI, the first SC DCI, and the second SC DCI, the first MC DCI schedules 1 PDSCH, and the second MC DCI schedules 2 PDSCHs. Then a first sub-codebook is jointly generated for the first MC DCI, the first SC DCI, and the second SC DCI, the first sub-codebook includes 3 bits, and a second sub-codebook is generated for the second MC DCI, the second sub-codebook includes 2 bits.

### 2) Feedback bit ordering of the sub-codebook in HARQ feedback:

The feedback bits generated for the DCI of the same scheduling case in the sub-codebook are sorted in time-frequency order. The feedback bits generated for the DCI of different scheduling cases are sorted in time-frequency order, or sorted according to the number of scheduled cells.

In the third sub-codebook shared by the MC DCI and the SC DCI, the feedback bits corresponding to the DCI of the same scheduling case are sorted in time-frequency order; wherein the same scheduling case includes any one of the following being the same: the number of scheduled PDSCHs, the number of scheduled cells, the number of scheduled carriers, the number of scheduled component carriers, and the number of scheduled subbands. It should be noted that when MC DCI schedules 1 PDSCH, the MC DCI and the SC DCI belong to the same scheduling case.

In the third sub-codebook, the feedback bits corresponding to the DCI of different scheduling cases are sorted according to the number of scheduled PDSCH/cell/carrier/component carrier/subband; wherein the different scheduling cases include any one of the following being different: a number of scheduled PDSCHs, a number of scheduled cells, a number of scheduled carriers, a number of scheduled component carriers, and a number of scheduled subbands.

For example, the HARQ feedback is used to feedback the first MC DCI, the second MC DCI, the first SC DCI, and the second SC DCI, the first MC DCI schedules 4 PDSCHs on 4 cells, the second MC DCI schedules 1 PDSCH on 1 cell, the first SC DCI schedules 1 PDSCH on 1 cell, and the second SC DCI schedules 1 PDSCH on 1 cell. Then the HARQ feedback includes the first sub-codebook corresponding to the first MC DCI, the second MC DCI, the first SC DCI, and the second SC DCI, and the first sub-codebook includes 7 bits. In the embodiment, the second MC DCI, the first SC DCI, and the second SC DCI belong to the same scheduling case, then the feedback bits of the second MC DCI, the first SC DCI, and the second SC DCI are sorted in time-frequency order, and the first MC DCI and the other three DCIs have different scheduling cases. Then according to the number of scheduled PDSCHs, the feedback bits of the second MC DCI, the first SC DCI, and the second SC DCI are ranked in front, and the feedback bit of the first MC DCI is ranked behind. The first feedback bit of the first sub-codebook is used to feedback the PDSCH scheduled by the second MC DCI, the second feedback bit is used to feedback the PDSCH scheduled by the first SC DCI, the third feedback bit is used to feedback the PDSCH scheduled by the second SC DCI, and the fourth feedback bit to the seventh feedback bit are used to feedback the 4 PDSCHs scheduled by the first MC DCI.

In an optional embodiment, the base station sends at least one DCI signaling to the UE, and the UE can receive the DCI signaling sent by the base station. The base station can schedule at least one PDSCH on at least one cell/carrier/subband for the UE through one DCI signaling. For example, the base station sends a DCI to the UE, and the DCI includes scheduling information of 4 cells. After the UE successfully decodes the DCI, it receives the PDSCH on the time-frequency resources of the corresponding 4 cells. One TB is carried by at least one PDSCH. Optionally, one PDSCH carries one TB.

There are at least two types of DCI, for example, there are a first DCI and a second DCI in the network. The first DCI schedules only one PDSCH on one cell, and the second DCI schedules two PDSCHs on at least two cells. Optionally, the base station schedules the PDSCH for the UE through at least one of the first and second DCIs, and each cell contains at least one PDSCH in the scheduling time window. The scheduling time window includes at least one of the following: one or more time domain symbols, one or more mini slots, one or more slots, half a radio frame, and one or more radio frames.

In an embodiment, different types of DCI may be in the same DCI format, or in different DCI formats.

The base station sends the DCI to the UE in a UE-specific signaling to schedule the PDSCH. The sent DCI includes at least one of the following: the first DCI and the second DCI. In a feedback cycle, the UE receives and decodes the DCI and feeds back the HARQ-ACK information to the base station. When the UE feeds back the HARQ-ACK information and generates the HARQ-ACK feedback codebook, the UE independently generates sub-codebooks for scheduling DCI of different numbers of cells, and the different sub-codebooks are arranged in a certain order. The specific method is as follows:

The UE supports the base station to send the first DCI and the second DCI for the UE. When the UE feeds back the codebook, the UE generates a first sub-codebook for the first DCI and a first sub-codebook for the second DCI. The UE generates one bit for each first DCI and n bits for each second DCI, where n is the number of cells scheduled by the second DCI.

The sub-codebooks generated for the DCI of the same scheduling case are sorted in the time domain first and then the frequency domain, or in the frequency domain first and then the time domain.

The sub-codebooks generated for the DCI of different scheduling cases are sorted in the order of the number of scheduled cells from small to large, or from large to small.

When sorting in the frequency domain, the cells may be sorted in descending order or in ascending order according to the cell index. When sorting in the time domain, the cells may be sorted in the order of DCI arrival or in the order of DCI decoding.

Based on the above description of method 4, the following example is given:
As shown in FIG. 14, the base station sends the MC DCIO, MC DCI1, and SC DCIO to the terminal. The MC DCIO schedules two PDSCHs: PDSCHO and PDSCH1; the MC DCI1 schedules one PDSCH: PDSCHO; and the SC DCI2 schedules one PDSCH: PDSCHO. Then the HARQ feedback includes the first sub-codebook shared by the MC DCI and the SC DCI. The first sub-codebook includes 4 feedback bits, and the 3 feedback bits include 2 feedback bits corresponding to the MC DCIO, 1 feedback bit corresponding to the MC DCI1, and 1 feedback bit corresponding to the SC DCI1. The feedback bits of DCIs with the same scheduling case are sorted in time-frequency order, and the feedback bits corresponding to the MC DCI1 are ranked in front, and the feedback bits corresponding to the SC DCIO are ranked behind. The feedback bits of DCIs with different scheduling cases are sorted according to the number of scheduled cells, and the feedback bits corresponding to the MC DCI1 and the SC DCIO are ranked in front, and the feedback bits corresponding to the MC DCIO are ranked behind. The first feedback bit of the HARQ feedback is used to feedback the PDSCHO scheduled by the MC DCI1; the second feedback bit of the HARQ feedback is used to feedback the PDSCHO scheduled by the SC DCIO; the third feedback bit and the fourth feedback bit of the HARQ feedback are used to feedback the PDSCHO and PDSCH1 scheduled by the MC DCIO.

### Method 5:

### 1) Number of HARQ bits:

The DCI of the same scheduling case in the HARQ feedback shares a sub-codebook, and the bits of the sub-codebook are determined according to the number of cells/PDSCHs/carriers/component carriers/subbands actually scheduled.

The HARQ feedback is used to feedback the PDSCH corresponding to the DCI of at least two different scheduling cases; the HARQ feedback includes sub-codebooks corresponding to the DCI of at least two different scheduling cases, and the number of bits of each sub-codebook is determined according to the fifth number; wherein the fifth number includes the total number of PDSCHs scheduled by the DCI of the same scheduling case, the total number of cells scheduled by the DCI of the same scheduling case, the total number of carriers scheduled by the DCI of the same scheduling case, the total number of component carriers scheduled by the DCI of the same scheduling case, and the total number of subbands scheduled by the DCI of the same scheduling case; the different scheduling cases include any one of the following being different: the number of scheduled PDSCHs, the number of scheduled cells, the number of scheduled carriers, the number of scheduled component carriers, and the number of scheduled subbands; and the same scheduling case includes any one of the following being the same: the number scheduled PDSCHs, the number of scheduled cells, the number of scheduled carriers, the number of scheduled component carriers, and the number of scheduled subbands.

For example, the HARQ feedback is used to feedback the first MC DCI, the second MC DCI and the first SC DCI. The first MC DCI schedules 4 PDSCHs on 4 cells, the second MC DCI schedules 1 PDSCH on 1 cell, and the first SC DCI schedules 1 PDSCH on 1 cell. Then a sub-codebook is generated for the PDSCH scheduled by the first MC DCI, and the PDSCH scheduled by the second MC DCI and the first SC DCI share a sub-codebook, that is, the HARQ feedback includes two sub-codebooks. The sub-codebook shared by the PDSCH scheduled by the first MC DCI includes 4 bits, the sub-codebook shared by the second MC DCI and the first SC DCI includes 2 bits, and the HARQ feedback includes 6 bits in total.

### 2) Feedback bit ordering of the sub-codebook in HARQ feedback:

In the HARQ feedback, the feedback bits corresponding to the DCI of the same scheduling case are sorted in time-frequency order.

The time-frequency order includes the time-frequency order of DCI or the time-frequency order of PDSCH.

For example, the HARQ feedback is used to feedback the first MC DCI, the second MC DCI and the first SC DCI, the first MC DCI schedules 4 PDSCHs on 4 cells, the second MC DCI schedules 1 PDSCH on 1 cell, and the first SC DCI schedules 1 PDSCH on 1 cell. Then the HARQ feedback includes two sub-codebooks, the first sub-codebook is used to feedback the first MC DCI, and the second sub-codebook is used to feedback the second MC DCI and the first SC DCI. The first sub-codebook includes 4 bits, and the 4 feedback bits are sorted in time-frequency order, for example, in the time-frequency order of thePDSCH. The second sub-codebook includes 2 bits, and the 2 bits are sorted in time-frequency order, for example, in the time-frequency order of DCI.

### 3) Sorting of sub-codebooks in HARQ feedback:

The sub-codebooks corresponding to the DCIs of different scheduling cases in the HARQ feedback are sorted according to the number of scheduled PDSCHs.

For example, the HARQ feedback is used to feedback the first MC DCI, the second MC DCI and the first SC DCI, the first MC DCI schedules 4 PDSCHs on 4 cells, the second MC DCI schedules 1 PDSCH on 1 cell, and the first SC DCI schedules 1 PDSCH on 1 cell. Then the HARQ feedback includes two sub-codebooks, the first sub-codebook is used to feedback the first MC DCI, and the second sub-codebook is used to feedback the second MC DCI and the first SC DCI. The first sub-codebook and the second sub-codebook are sorted according to the number of scheduled PDSCHs, the second sub-codebook is ranked in front, and the first sub-codebook is ranked behind, that is, the HARQ feedback includes the second sub-codebook and the first sub-codebook in sequence.

In an optional embodiment, the base station sends at least one DCI signaling to the UE, and the UE can receive the DCI signaling sent by the base station. The base station can schedule at least one PDSCH for the UE on at least one cell/carrier/subband through one DCI signaling. For example, the base station sends a DCI to the UE, and the DCI includes scheduling information of 4 cells. After the UE successfully decodes the DCI, it receives the PDSCH on the time-frequency resources of the corresponding 4 cells. One TB is carried by at least one PDSCH, and optionally, one PDSCH carries one TB.

In an embodiment, different types of DCI schedule different numbers of cells, or different types of DCI schedule different numbers of PDSCHs in the frequency domain. For example, the first DCI schedules one PDSCH on one cell, the second DCI schedules two PDSCHs on two cells, the third DCI schedules three PDSCHs on three cells, and the fourth DCI schedules four PDSCHs on four cells. Similar details are not repeated here. Optionally, each cell contains one PDSCH in the scheduling time window. The composition of the scheduling time window includes at least one of the following: one or more time domain symbols, one or more mini slots, one or more slots, half a radio frame, and one or more radio frames.

In an embodiment, different types of DCI may be in the same DCI format, or in different DCI formats.

The base station sends the DCI to the UE in a UE-specific signaling to schedule the PDSCH. The sent DCI includes at least one of the following: a first DCI, a second DCI, a third DCI, a fourth DCI, etc. In one feedback cycle, the UE receives and decodes the DCI and feeds back the HARQ-ACK information to the base station. When the UE feeds back the HARQ-ACK information and generates the HARQ-ACK feedback codebook, the UE independently generates sub-codebooks for scheduling DCI of different numbers of cells, and different sub-codebooks are arranged in a certain order. The specific method is as follows:

The UE supports the base station to send the first DCI, the second DCI, the third DCI, the fourth DCI, etc. for the UE. When the UE feeds back the codebook, the UE generates a first sub-codebook for the first DCI, a second sub-codebook for the second DCI, a third sub-codebook for the third DCI, a fourth sub-codebook for the fourth DCI, etc. The UE generates one bit for each first DCI, generates 2 bits for each second DCI, generates 3 bits for each third DCI, and generates 4 bits for each fourth DCI.

The feedback bits in the sub-codebook generated based on the same type of DCI are sorted in the time domain first and then the frequency domain, or in the frequency domain first and then the time domain.

The sub-codebooks generated based on different types of DCI are sorted from small to large, or from large to small according to the number of scheduled cells.

When sorting in the frequency domain, the cells may be sorted in descending order or in ascending order according to the cell index. When sorting in the time domain, the cells may be sorted in the order of DCI arrival or in the order of DCI decoding.

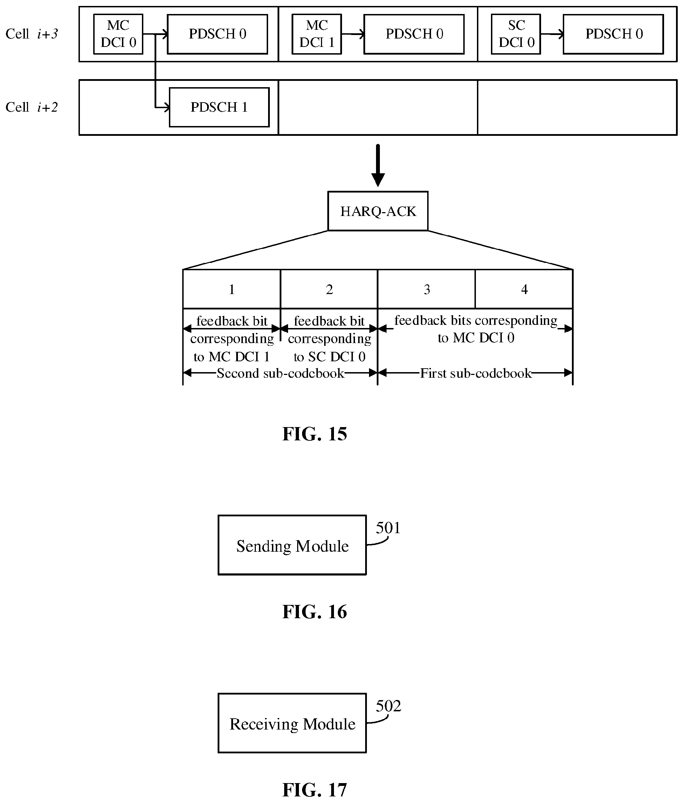

Based on the above description of method 5, the following example is given:
As shown in FIG. 15, the base station sends the MC DCIO, MC DCI1, and SC DCIO to the terminal. The MC DCIO schedules two PDSCHs: PDSCHO and PDSCH1; the MC DCI1 schedules one PDSCH: PDSCHO; and the SC DCI2 schedules one PDSCH: PDSCHO. Then the HARQ feedback includes the first sub-codebook corresponding to the MC DCIO and the second sub-codebook shared by the SC DCIO and the MC DCI1. The first sub-codebook includes 2 feedback bits, and the 2 feedback bits include 2 feedback bits corresponding to the MC DCIO. The feedback bits in the first sub-codebook are sorted in time-frequency order. The second sub-codebook includes 2 feedback bits, and the 2 feedback bits include 1 feedback bit corresponding to the SC DCIO and 1 feedback bit corresponding to the MC DCI1. The feedback bits in the second sub-codebook are sorted in time-frequency order. The first sub-codebook and the second sub-codebook are sorted in order of the number of scheduled cells, and the first feedback bit of HARQ feedback is used to feedback PDSCHO scheduled by MC DCI1; the second feedback bit of HARQ feedback is used to feedback PDSCHO scheduled by SC DCIO; the third feedback bit and the fourth feedback bit of HARQ feedback are used to feedback PDSCHO and PDSCH1 scheduled by MC DCIO.

To summarize, in the method provided in this embodiment, when the base station schedules the PDSCH for the terminal on multiple cells through the MC DCI and schedules the PDSCH for the terminal on one cell through the SC DCI, the terminal can jointly generate the HARQ feedback of the PDSCH of the MC DCI and the SC DCI. A method for the terminal to generate the HARQ feedback of the PDSCH in the SC DCI and the MC DCI scheduling scenarios is given, which facilitates the terminal to feedback the reception status of the PDSCH scheduled by the MC DCI and the SC DCI to the base station.

FIG. 16 shows a block diagram of a hybrid automatic repeat request HARQ feedback apparatus provided by an exemplary embodiment of the present application, wherein the apparatus is used to implement a terminal, and the apparatus includes:

a sending module 501, configured to send HARQ feedback of the downlink shared channel PDSCH scheduled based on multi-cell downlink control information MC DCI.

In an optional embodiment, a number of bits of the HARQ feedback is determined according to a maximum number N of scheduled cells of the terminal, and N is a positive integer.

In an optional embodiment, the HARQ feedback is used to feedback the PDSCH scheduled by at least one MC DCI, and the HARQ feedback includes a sub-codebook shared by the at least one MC DCI, and the sub-codebook includes a bit corresponding to the at least one MC DCI, one MC DCI corresponds to N bits or one bit, and N is a maximum number of scheduled cells of the terminal.

In an optional embodiment, the at least one MC DCI includes: a first MC DCI;
in a case where one PDSCH is scheduled by the first MC DCI, the first MC DCI corresponds to one bit; and
in a case where multiple PDSCHs are scheduled by the first MC DCI, the first MC DCI corresponds to N bits, wherein N is the maximum number of the scheduled cells of the terminal.

In an optional embodiment, one MC DCI corresponds to N bits, and N is the maximum number of the scheduled cells of the terminal; and
wherein the maximum number of the scheduled cells is a maximum number of supported cells reported by the terminal to a network device; or the maximum number of the scheduled cells is the maximum number of supported cells configured by the network device for the terminal.

In an optional embodiment, the HARQ feedback is further used to feedback the PDSCH scheduled by at least one single-cell downlink control information (SC DCI); and
the HARQ feedback further includes a sub-codebook corresponding to the at least one SC DCI respectively; or, the HARQ feedback further includes a same sub-codebook shared by the at least one SC DCI; or, the HARQ feedback further includes a same sub-codebook shared by the at least one SC DCI and the MC DCI that schedules one PDSCH.

In an optional embodiment, feedback bits of each sub-codebook in the HARQ feedback are sorted in time-frequency order.

In an optional embodiment, the sub-codebook in the HARQ feedback is sorted according to a first rule; and
wherein first rule includes sorting according to at least one of a type of sub-codebook, a cell index, a time domain order of DCI, a frequency domain order of DCI, a time domain order of PDSCH, a PDCCH monitoring occasion index, and a DCI decoding success time order.

In an optional embodiment, the at least one MC DCI includes a second MC DCI; and
when a number of bits corresponding to the second MC DCI in the sub-codebook is greater than a number of PDSCHs actually scheduled by the second MC DCI, the sub-codebook includes a valid feedback bit.

In an optional embodiment, a number of bits of the HARQ feedback is determined according to a first number; and
the first number includes any one of a number of PDSCHs scheduled by the MC DCI, a number of cells scheduled by the MC DCI, a number of carriers scheduled by the MC DCI, a number of component carriers scheduled by the MC DCI, and a number of subbands scheduled by the MC DCI.

In an optional embodiment, the HARQ feedback is used to feed back the PDSCH scheduled by at least one MC DCI, the HARQ feedback includes a first sub-codebook shared by the at least one MC DCI, and a number of bits of the first sub-codebook is determined according to a second number; and
wherein the second number includes any one of a total number of PDSCHs scheduled by the at least one MC DCI, a total number of cells scheduled by the at least one MC DCI, a total number of carriers scheduled by the at least one MC DCI, a total number of component carriers scheduled by the at least one MC DCI, and a total number of subbands scheduled by the at least one MC DCI.

In an optional embodiment, the HARQ feedback is further used to feed back the PDSCH scheduled by at least one SC DCI, the HARQ feedback includes a second sub-codebook shared by the at least one SC DCI, and a number of bits of the second sub-codebook is determined according to a third number; and
wherein the third number includes any one of a total number of PDSCHs scheduled by the at least one SC DCI, a total number of cells scheduled by the at least one SC DCI, a total number of carriers scheduled by the at least one SC DCI, a total number of component carriers scheduled by the at least one SC DCI, and a total number of subbands scheduled by the at least one SC DCI.

In an optional embodiment, the at least one MC DCI includes at least two MC DCIs; and
in the first sub-codebook, feedback bits corresponding to the MC DCI of a same scheduling case are sorted in time-frequency order; and
wherein the same scheduling case includes any one of the following being the same: a number of scheduled PDSCHs, a number of scheduled cells, a number of scheduled carriers, a number of scheduled component carriers, and a number of scheduled subbands.

In an optional embodiment, the at least one MC DCI includes at least two MC DCIs;
in the first sub-codebook, feedback bits corresponding to the MC DCIs of different scheduling cases are sorted according to a number of scheduled PDSCHs; and
wherein the different scheduling cases include any one of the following being different: a number of scheduled PDSCHs, a number of scheduled cells, a number of scheduled carriers, a number of scheduled component carriers, and a number of scheduled subbands.

In an optional embodiment, feedback bits in the first sub-codebook are sorted in time-frequency order.

In an optional embodiment, the feedback bits in the second sub-codebook are sorted in time-frequency order.

In an optional embodiment, the first sub-codebook and the second sub-codebook in the HA RQ feedback are sorted according to a second rule; and
wherein the second rule includes sorting according to at least one of a type of sub-codebook, a cell index, a time domain order of DCI, a frequency domain order of DCI, a time domain order of PDSCH, a PDCCH monitoring occasion index, and a DCI decoding success time order.

In an optional embodiment, the HARQ feedback is used to feed back the PDSCH scheduled by at least one MC DCI and at least one SC DCI, the HARQ feedback includes a third sub-codebook shared by the at least one MC DCI and the at least one SC DCI, and a number of bits of the third sub-codebook is determined according to a fourth number; and
wherein the fourth number includes any one of a total number of PDSCHs scheduled by the at least one MC DCI and the at least one SC DCI, a total number of cells scheduled by the at least one MC DCI and the at least one SC DCI, a total number of carriers scheduled by the at least one MC DCI and the at least one SC DCI, a total number of component carriers scheduled by the at least one MC DCI and the at least one SC DCI, and a total number of subbands scheduled by the at least one MC DCI and the at least one SC DCI.

In an optional embodiment, in the third sub-codebook, feedback bits corresponding to the DCI of a same scheduling case are sorted in time-frequency order; and
wherein the same scheduling case includes any one of the following being the same: a number of scheduled PDSCHs, a number of scheduled cells, a number of scheduled carriers, a number of scheduled component carriers, and a number of scheduled subbands.

In an optional embodiment, in the third sub-codebook, feedback bits corresponding to the DCIs of different scheduling cases are sorted according to a number of scheduled PDSCHs; and
wherein the different scheduling cases include any one of the following being different: a number of scheduled PDSCHs, a number of scheduled cells, a number of scheduled carriers, a number of scheduled component carriers, and a number of scheduled subbands.

In an optional embodiment, in a case where the at least one MC DCI includes the MC DCI for scheduling one PDSCH, the HARQ feedback includes a third sub-codebook shared by the MC DCI for scheduling one PDSCH and the at least one SC DCI; and
in a case where the at least one MC DCI includes the MC DCI for scheduling multiple PDSCHs, the HARQ feedback includes a fourth sub-codebook corresponding to the MC DCI for scheduling multiple PDSCHs, and the HARQ feedback further includes a fifth sub-codebook shared by the at least one SC DCI.

In an optional embodiment, the HARQ feedback is used to feedback the PDSCH corresponding to the DCI of at least two different scheduling cases; and
the HARQ feedback includes sub-codebooks corresponding to the DCIs of the at least two different scheduling cases, respectively, and a number of bits of each of the sub-codebooks is determined according to a fifth number;
wherein the fifth number includes any one of a total number of PDSCHs scheduled by the DCI of a same scheduling case, a total number of cells scheduled by the DCI of the same scheduling case, a total number of carriers scheduled by the DCI of the same scheduling case, a total number of component carriers scheduled by the DCI of the same scheduling case, and a total number of subbands scheduled by the DCI of the same scheduling case;
the different scheduling cases include any one of the following being different: a number of scheduled PDSCHs, a number of scheduled cells, a number of scheduled carriers, a number of scheduled component carriers, and a number of scheduled subbands; and
the same scheduling case includes any one of the following being the same: a number of scheduled PDSCHs, a number of scheduled cells, a number of scheduled carriers, a number of scheduled component carriers, and a number of scheduled subbands.

In an optional embodiment, feedback bits corresponding to the DCI of the same scheduling case in the HARQ feedback are sorted in time-frequency order.

In an optional embodiment, the sub-codebooks corresponding to the DCIs of different scheduling cases in the HARQ feedback are sorted according to the number of scheduled PDSCHs.

FIG. 17 shows a block diagram of a hybrid automatic repeat request HARQ feedback apparatus provided by an exemplary embodiment of the present application, wherein the apparatus is used to implement a network device, and the apparatus includes:
a receiving module 502, configured to receive a HARQ feedback of a downlink shared channel (PDSCH) scheduled based on multi-cell downlink control information (MC DCI).

In an optional embodiment, a number of bits of the HARQ feedback is determined according to a maximum number N of scheduled cells of the terminal, and N is a positive integer.

In an optional embodiment, the HARQ feedback is used to feedback the PDSCH scheduled by at least one MC DCI, and the HARQ feedback includes a sub-codebook shared by the at least one MC DCI, and the sub-codebook includes a bit corresponding to the at least one MC DCI, one MC DCI corresponds to N bits or one bit, and N is a maximum number of scheduled cells of the terminal.

In an optional embodiment, the at least one MC DCI includes: a first MC DCI;
in a case where one PDSCH is scheduled by the first MC DCI, the first MC DCI corresponds to one bit; and
in a case where multiple PDSCHs are scheduled by the first MC DCI, the first MC DCI corresponds to N bits, wherein N is the maximum number of the scheduled cells of the terminal.

In an optional embodiment, one MC DCI corresponds to N bits, and N is the maximum number of the scheduled cells of the terminal; and
wherein the maximum number of the scheduled cells is a maximum number of supported cells reported by a terminal to the network device; or the maximum number of the scheduled cells is the maximum number of supported cells configured by the network device for the terminal.

In an optional embodiment, the HARQ feedback is further used to feedback the PDSCH scheduled by at least one single-cell downlink control information (SC DCI); and
the HARQ feedback further includes a sub-codebook corresponding to the at least one SC DCI respectively; or, the HARQ feedback further includes a same sub-codebook shared by the at least one SC DCI; or, the HARQ feedback further includes a same sub-codebook shared by the at least one SC DCI and the MC DCI that schedules one PDSCH.

In an optional embodiment, feedback bits of each sub-codebook in the HARQ feedback are sorted in time-frequency order.

In an optional embodiment, the first sub-codebook and the second sub-codebook in the HARQ feedback are sorted according to a first rule; and
wherein first rule includes sorting according to at least one of a type of sub-codebook, a cell index, a time domain order of DCI, a frequency domain order of DCI, a time domain order of PDSCH, a PDCCH monitoring occasion index, and a DCI decoding success time order.

In an optional embodiment, the at least one MC DCI includes a second MC DCI; and
when a number of bits corresponding to the second MC DCI in the sub-codebook is greater than a number of PDSCHs actually scheduled by the second MC DCI, the sub-codebook includes a valid feedback bit.

In an optional embodiment, a number of bits of the HARQ feedback is determined according to a first number; and
the first number includes any one of a number of PDSCHs scheduled by the MC DCI, a number of cells scheduled by the MC DCI, a number of carriers scheduled by the MC DCI, a number of component carriers scheduled by the MC DCI, and a number of subbands scheduled by the MC DCI.

In an optional embodiment, the HARQ feedback is used to feed back the PDSCH scheduled by at least one MC DCI, the HARQ feedback includes a first sub-codebook shared by the at least one MC DCI, and a number of bits of the first sub-codebook is determined according to a second number; and
wherein the second number includes any one of a total number of PDSCHs scheduled by the at least one MC DCI, a total number of cells scheduled by the at least one MC DCI, a total number of carriers scheduled by the at least one MC DCI, a total number of component carriers scheduled by the at least one MC DCI, and a total number of subbands scheduled by the at least one MC DCI.

In an optional embodiment, the HARQ feedback is further used to feed back the PDSCH scheduled by at least one SC DCI, the HARQ feedback includes a second sub-codebook shared by the at least one SC DCI, and a number of bits of the second sub-codebook is determined according to a third number; and
wherein the third number includes any one of a total number of PDSCHs scheduled by the at least one SC DCI, a total number of cells scheduled by the at least one SC DCI, a total number of carriers scheduled by the at least one SC DCI, a total number of component carriers scheduled by the at least one SC DCI, and a total number of subbands scheduled by the at least one SC DCI.

In an optional embodiment, the at least one MC DCI includes at least two MC DCIs; and
in the first sub-codebook, feedback bits corresponding to the MC DCI of a same scheduling case are sorted in time-frequency order; and
wherein the same scheduling case includes any one of the following being the same: a number of scheduled PDSCHs, a number of scheduled cells, a number of scheduled carriers, a number of scheduled component carriers, and a number of scheduled subbands.

In an optional embodiment, the at least one MC DCI includes at least two MC DCIs;
in the first sub-codebook, feedback bits corresponding to the MC DCIs of different scheduling cases are sorted according to a number of scheduled PDSCHs; and
wherein the different scheduling cases include any one of the following being different: a number of scheduled PDSCHs, a number of scheduled cells, a number of scheduled carriers, a number of scheduled component carriers, and a number of scheduled subbands.

In an optional embodiment, feedback bits in the first sub-codebook are sorted in time-frequency order.

In an optional embodiment, the feedback bits in the second sub-codebook are sorted in time-frequency order.

In an optional embodiment, the first sub-codebook and the second sub-codebook in the HA RQ feedback are sorted according to a second rule; and
wherein the second rule includes sorting according to at least one of a type of sub-codebook, a cell index, a time domain order of DCI, a frequency domain order of DCI, a time domain order of PDSCH, a PDCCH monitoring occasion index, and a DCI decoding success time order.

In an optional embodiment, the HARQ feedback is used to feed back the PDSCH scheduled by at least one MC DCI and at least one SC DCI, the HARQ feedback includes a third sub-codebook shared by the at least one MC DCI and the at least one SC DCI, and a number of bits of the third sub-codebook is determined according to a fourth number; and
wherein the fourth number includes any one of a total number of PDSCHs scheduled by the at least one MC DCI and the at least one SC DCI, a total number of cells scheduled by the at least one MC DCI and the at least one SC DCI, a total number of carriers scheduled by the at least one MC DCI and the at least one SC DCI, a total number of component carriers scheduled by the at least one MC DCI and the at least one SC DCI, and a total number of subbands scheduled by the at least one MC DCI and the at least one SC DCI.

In an optional embodiment, in the third sub-codebook, feedback bits corresponding to the DCI of a same scheduling case are sorted in time-frequency order; and
wherein the same scheduling case includes any one of the following being the same: a number of scheduled PDSCHs, a number of scheduled cells, a number of scheduled carriers, a number of scheduled component carriers, and a number of scheduled subbands.

In an optional embodiment, in the third sub-codebook, feedback bits corresponding to the DCIs of different scheduling cases are sorted according to a number of scheduled PDSCHs; and
wherein the different scheduling cases include any one of the following being different: a number of scheduled PDSCHs, a number of scheduled cells, a number of scheduled carriers, a number of scheduled component carriers, and a number of scheduled subbands.

In an optional embodiment, in a case where the at least one MC DCI includes the MC DCI for scheduling one PDSCH, the HARQ feedback includes a third sub-codebook shared by the MC DCI for scheduling one PDSCH and the at least one SC DCI; and
in a case where the at least one MC DCI includes the MC DCI for scheduling multiple PDSCHs, the HARQ feedback includes a fourth sub-codebook corresponding to the MC DCI for scheduling multiple PDSCHs, and the HARQ feedback further includes a fifth sub-codebook shared by the at least one SC DCI.

In an optional embodiment, the HARQ feedback is used to feedback the PDSCH corresponding to the DCI of at least two different scheduling cases; and
the HARQ feedback includes sub-codebooks corresponding to the DCIs of the at least two different scheduling cases, respectively, and a number of bits of each of the sub-codebooks is determined according to a fifth number;
wherein the fifth number includes any one of a total number of PDSCHs scheduled by the DCI of a same scheduling case, a total number of cells scheduled by the DCI of the same scheduling case, a total number of carriers scheduled by the DCI of the same scheduling case, a total number of component carriers scheduled by the DCI of the same scheduling case, and a total number of subbands scheduled by the DCI of the same scheduling case;
the different scheduling cases include any one of the following being different: a number of scheduled PDSCHs, a number of scheduled cells, a number of scheduled carriers, a number of scheduled component carriers, and a number of scheduled subbands; and
the same scheduling case includes any one of the following being the same: a number of scheduled PDSCHs, a number of scheduled cells, a number of scheduled carriers, a number of scheduled component carriers, and a number of scheduled subbands.

In an optional embodiment, feedback bits corresponding to the DCI of the same scheduling case in the HARQ feedback are sorted in time-frequency order.

In an optional embodiment, the sub-codebooks corresponding to the DCIs of different scheduling cases in the HARQ feedback are sorted according to the number of scheduled PDSCHs.

It should be noted that, the apparatus provided in the above embodiment only uses the division of the above functional modules as an example to implement its functions. In actual applications, the above-mentioned functions can be assigned to different functional modules according to actual needs, that is, the content structure of the device can be divided into different functional modules to complete all or part of the functions described above.

Regarding the apparatus in the above embodiment, the specific manner in which each module performs operations has been described in detail in the embodiment of the method, and will not be elaborated here.

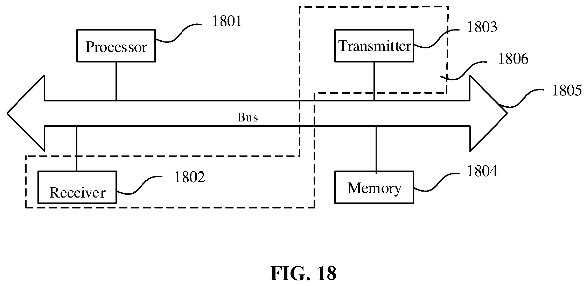

FIG. 18 shows a schematic diagram of the structure of a communication device (terminal or network device) provided in one embodiment of the present application. The communication device may include: a processor 1801, a receiver 1802, a transmitter 1803, a memory 1804 and a bus 1805.

The processor 1801 includes one or more processing cores. The processor 1801 executes various functional applications and sends data by running software programs and modules.

The receiver 1802 and the transmitter 1803 may be implemented as a transceiver 1806, which may be a communication chip.

The memory 1804 is connected to the processor 1801 via a bus 1805.

The memory 1804 may be used to store a computer program, and the processor 1801 may be used to execute the computer program to implement the method on at least one device side of the first network node side, the second network node side, or the terminal side in the above method embodiment.

In addition, the memory 1804 can be implemented by any type of volatile or non-volatile storage device or a combination thereof, and the volatile or non-volatile storage device includes but is not limited to: random-access memory (RAM) and read-only memory (ROM), erasable programmable read-only memory (EPROM), electrically erasable programmable read-only memory (EEPROM), flash memory or other solid-state storage technology, compact disc read-only memory (CD-ROM), high-density digital video disc (DVD) or other optical storage, tape cassettes, magnetic tapes, disk storage or other magnetic storage devices.

In the embodiments, when the communication device is implemented as a terminal, the processor and transceiver involved in the embodiment of the present application can execute the steps performed by the terminal in the above method, which will not be repeated here.

In a possible implementation manner, when the communication device is implemented as a terminal,

The transceiver is used to send HARQ feedback of a downlink shared channel PDSCH scheduled based on multi-cell downlink control information MC DCI.

In the embodiments, when the communication device is implemented as a network device, the processor and transceiver involved in the embodiment of the present application can execute the steps performed by the network device in the above method, which will not be repeated here.

The transceiver is used to receive HARQ feedback of a downlink shared channel PDSCH scheduled based on multi-cell downlink control information MC DCI.

An embodiment of the present application also provides a computer-readable storage medium, in which a computer program is stored. The computer program is used to be executed by a processor of a computer device to implement the method on at least one device side of the core network device side, the remote terminal side, or the relay terminal side in the above method embodiment.

Optionally, the computer readable storage medium may include: a read-only memory (ROM), a random access memory (RAM), a solid state drive (SSD) or an optical disk, etc. In the embodiments, the random access memory may include a resistance random access memory (ReRAM) and a dynamic random access memory (DRAM).

An embodiment of the present application also provides a chip, which includes a programmable logic circuit and/or program instructions. When the chip runs on a terminal, it is used to implement the method on at least one device side of the core network device side, the remote terminal side, or the relay terminal side in the above method embodiment.

An embodiment of the present application also provides a computer program product or a computer program, wherein the computer program product or the computer program includes computer instructions, and the computer instructions are stored in a computer-readable storage medium. The processor of the terminal reads and executes the computer instructions from the computer-readable storage medium to implement the method on at least one device side of the core network device side, the remote terminal side, or the relay terminal side in the above method embodiment.

Through the description of the above implementation methods, those skilled in the art can clearly understand that the method according to the above embodiment can be implemented by means of software plus a necessary general hardware platform, and of course by hardware, but in many cases the former is a better implementation method. Based on this understanding, the technical solution of the present application, or the part that contributes to the prior art, can be embodied in the form of a software product, which is stored in a storage medium (such as ROM/RAM, magnetic disk, optical disk), and includes a number of instructions for a terminal (which can be a mobile phone, computer, service device, or network device, etc.) to execute the methods described in each embodiment of the present application.

Obviously, those skilled in the art should understand that the above modules or steps of the present application can be implemented by a general computing device, they can be concentrated on a single computing device, or distributed on a network including multiple computing devices, and optionally, they can be implemented by a program code executable by a computing device, so that they can be stored in a storage device and executed by the computing device, and in some cases, the steps shown or described can be executed in a different order from that herein, or they can be made into individual integrated circuit modules, or multiple modules or steps therein can be made into a single integrated circuit module for implementation. Thus, the present application is not limited to any specific combination of hardware and software.

The above description is only an optional embodiment of the present application and is not intended to limit the present application. For those skilled in the art, the present application may have various modifications and variations. Any modification, equivalent replacement, improvement, etc. made within the principles of the present application shall be included in the protection scope of the present application.

## Claims

1. A hybrid automatic repeat request (HARQ) feedback method, executed by a terminal, and comprising:
sending a HARQ feedback of a downlink shared channel (PDSCH) scheduled based on multi-cell downlink control information (MC DCI).

2. The method according to claim 1, wherein a number of bits of the HARQ feedback is determined according to a maximum number N of scheduled cells of the terminal, and N is a positive integer.

3. The method according to claim 2, wherein the HARQ feedback is used to feedback the PDSCH scheduled by at least one MC DCI, and the HARQ feedback comprises a sub-codebook shared by the at least one MC DCI, and the sub-codebook comprises a bit corresponding to the at least one MC DCI, one MC DCI corresponds to N bits or one bit, and N is a maximum number of scheduled cells of the terminal.

4. The method according to claim 3, wherein the at least one MC DCI comprises: a first MC DCI;
in a case where one PDSCH is scheduled by the first MC DCI, the first MC DCI corresponds to one bit; and
in a case where multiple PDSCHs are scheduled by the first MC DCI, the first MC DCI corresponds to N bits, wherein N is the maximum number of the scheduled cells of the terminal.

5. The method according to claim 3, wherein one MC DCI corresponds to N bits, and N is the maximum number of the scheduled cells of the terminal; and
wherein the maximum number of the scheduled cells is a maximum number of supported cells reported by the terminal to a network device; or the maximum number of the scheduled cells is the maximum number of supported cells configured by the network device for the terminal.

6. The method according to any one of claims 3 to 5, wherein the HARQ feedback is further used to feedback the PDSCH scheduled by at least one single-cell downlink control information (SC DCI); and
the HARQ feedback further comprises a sub-codebook corresponding to the at least one SC DCI respectively; or, the HARQ feedback further comprises a same sub-codebook shared by the at least one SC DCI; or, the HARQ feedback further comprises a same sub-codebook shared by the at least one SC DCI and the MC DCI that schedules one PDSCH.

7. The method according to any one of claims 3 to 6, wherein feedback bits of each sub-codebook in the HARQ feedback are sorted in time-frequency order.

8. The method according to any one of claims 3 to 7, wherein the sub-codebook in the HARQ feedback is sorted according to a first rule; and
wherein first rule comprises sorting according to at least one of a type of sub-codebook, a cell index, a time domain order of DCI, a frequency domain order of DCI, a time domain order of PDSCH, a PDCCH monitoring occasion index, and a DCI decoding success time order.

9. The method according to any one of claims 3 to 8, wherein the at least one MC DCI comprises a second MC DCI; and
when a number of bits corresponding to the second MC DCI in the sub-codebook is greater than a number of PDSCHs actually scheduled by the second MC DCI, the sub-codebook comprises a valid feedback bit.

10. The method according to claim 1, wherein a number of bits of the HARQ feedback is determined according to a first number; and
the first number comprises any one of a number of PDSCHs scheduled by the MC DCI, a number of cells scheduled by the MC DCI, a number of carriers scheduled by the MC DCI, a number of component carriers scheduled by the MC DCI, and a number of subbands scheduled by the MC DCI.

11. The method according to claim 10, wherein the HARQ feedback is used to feed back the PDSCH scheduled by at least one MC DCI, the HARQ feedback comprises a first sub-codebook shared by the at least one MC DCI, and a number of bits of the first sub-codebook is determined according to a second number; and
wherein the second number comprises any one of a total number of PDSCHs scheduled by the at least one MC DCI, a total number of cells scheduled by the at least one MC DCI, a total number of carriers scheduled by the at least one MC DCI, a total number of component carriers scheduled by the at least one MC DCI, and a total number of subbands scheduled by the at least one MC DCI.

12. The method according to claim 11, wherein the HARQ feedback is further used to feed back the PDSCH scheduled by at least one SC DCI, the HARQ feedback comprises a second sub-codebook shared by the at least one SC DCI, and a number of bits of the second sub-codebook is determined according to a third number; and
wherein the third number comprises any one of a total number of PDSCHs scheduled by the at least one SC DCI, a total number of cells scheduled by the at least one SC DCI, a total number of carriers scheduled by the at least one SC DCI, a total number of component carriers scheduled by the at least one SC DCI, and a total number of subbands scheduled by the at least one SC DCI.

13. The method according to claim 11 or 12, wherein the at least one MC DCI comprises at least two MC DCIs; and
in the first sub-codebook, feedback bits corresponding to the MC DCI of a same scheduling case are sorted in time-frequency order; and
wherein the same scheduling case comprises any one of the following being the same: a number of scheduled PDSCHs, a number of scheduled cells, a number of scheduled carriers, a number of scheduled component carriers, and a number of scheduled subbands.

14. The method according to claim 11 or 12, wherein the at least one MC DCI comprises at least two MC DCIs;
in the first sub-codebook, feedback bits corresponding to the MC DCIs of different scheduling cases are sorted according to a number of scheduled PDSCHs; and
wherein the different scheduling cases comprise any one of the following being different: a number of scheduled PDSCHs, a number of scheduled cells, a number of scheduled carriers, a number of scheduled component carriers, and a number of scheduled subbands.

15. The method according to claim 11 or 12, wherein feedback bits in the first sub-codebook are sorted in time-frequency order.

16. The method according to claim 12, wherein the feedback bits in the second sub-codebook are sorted in time-frequency order.

17. The method according to claim 12, wherein the first sub-codebook and the second sub-codebook in the HA RQ feedback are sorted according to a second rule; and
wherein the second rule comprises sorting according to at least one of a type of sub-codebook, a cell index, a time domain order of DCI, a frequency domain order of DCI, a time domain order of PDSCH, a PDCCH monitoring occasion index, and a DCI decoding success time order.

18. The method according to claim 10, wherein the HARQ feedback is used to feed back the PDSCH scheduled by at least one MC DCI and at least one SC DCI, the HARQ feedback comprises a third sub-codebook shared by the at least one MC DCI and the at least one SC DCI, and a number of bits of the third sub-codebook is determined according to a fourth number; and
wherein the fourth number comprises any one of a total number of PDSCHs scheduled by the at least one MC DCI and the at least one SC DCI, a total number of cells scheduled by the at least one MC DCI and the at least one SC DCI, a total number of carriers scheduled by the at least one MC DCI and the at least one SC DCI, a total number of component carriers scheduled by the at least one MC DCI and the at least one SC DCI, and a total number of subbands scheduled by the at least one MC DCI and the at least one SC DCI.

19. The method according to claim 18, wherein in the third sub-codebook, feedback bits corresponding to the DCI of a same scheduling case are sorted in time-frequency order; and
wherein the same scheduling case comprises any one of the following being the same: a number of scheduled PDSCHs, a number of scheduled cells, a number of scheduled carriers, a number of scheduled component carriers, and a number of scheduled subbands.

20. The method according to claim 18, wherein in the third sub-codebook, feedback bits corresponding to the DCIs of different scheduling cases are sorted according to a number of scheduled PDSCHs; and
wherein the different scheduling cases comprise any one of the following being different: a number of scheduled PDSCHs, a number of scheduled cells, a number of scheduled carriers, a number of scheduled component carriers, and a number of scheduled subbands.

21. The method according to claim 18, wherein in a case where the at least one MC DCI comprises the MC DCI for scheduling one PDSCH, the HARQ feedback comprises a third sub-codebook shared by the MC DCI for scheduling one PDSCH and the at least one SC DCI; and
in a case where the at least one MC DCI comprises the MC DCI for scheduling multiple PDSCHs, the HARQ feedback comprises a fourth sub-codebook corresponding to the MC DCI for scheduling multiple PDSCHs, and the HARQ feedback further comprises a fifth sub-codebook shared by the at least one SC DCI.

22. The method according to claim 10, wherein the HARQ feedback is used to feedback the PDSCH corresponding to the DCI of at least two different scheduling cases; and
the HARQ feedback comprises sub-codebooks corresponding to the DCIs of the at least two different scheduling cases, respectively, and a number of bits of each of the sub-codebooks is determined according to a fifth number;
wherein the fifth number comprises any one of a total number of PDSCHs scheduled by the DCI of a same scheduling case, a total number of cells scheduled by the DCI of the same scheduling case, a total number of carriers scheduled by the DCI of the same scheduling case, a total number of component carriers scheduled by the DCI of the same scheduling case, and a total number of subbands scheduled by the DCI of the same scheduling case;
the different scheduling cases comprise any one of the following being different: a number of scheduled PDSCHs, a number of scheduled cells, a number of scheduled carriers, a number of scheduled component carriers, and a number of scheduled subbands; and
the same scheduling case comprises any one of the following being the same: a number of scheduled PDSCHs, a number of scheduled cells, a number of scheduled carriers, a number of scheduled component carriers, and a number of scheduled subbands.

23. The method according to claim 22, wherein feedback bits corresponding to the DCI of the same scheduling case in the HARQ feedback are sorted in time-frequency order.

24. The method according to claim 22, wherein the sub-codebooks corresponding to the DCIs of different scheduling cases in the HARQ feedback are sorted according to the number of scheduled PDSCHs.

25. A hybrid automatic repeat request (HARQ) feedback method, executed by a network device, and comprising:
receiving a HARQ feedback of a downlink shared channel (PDSCH) scheduled based on multi-cell downlink control information (MC DCI).

26. The method according to claim 25, wherein a number of bits of the HARQ feedback is determined according to a maximum number N of scheduled cells of the terminal, and N is a positive integer.

27. The method according to claim 26, wherein the HARQ feedback is used to feedback the PDSCH scheduled by at least one MC DCI, and the HARQ feedback comprises a sub-codebook shared by the at least one MC DCI, and the sub-codebook comprises a bit corresponding to the at least one MC DCI, one MC DCI corresponds to N bits or one bit, and N is a maximum number of scheduled cells of the terminal.

28. The method according to claim 27, wherein the at least one MC DCI comprises: a first MC DCI;
in a case where one PDSCH is scheduled by the first MC DCI, the first MC DCI corresponds to one bit; and
in a case where multiple PDSCHs are scheduled by the first MC DCI, the first MC DCI corresponds to N bits, wherein N is the maximum number of the scheduled cells of the terminal.

29. The method according to claim 27, wherein one MC DCI corresponds to N bits, and N is the maximum number of the scheduled cells of the terminal; and
wherein the maximum number of the scheduled cells is a maximum number of supported cells reported by a terminal to the network device; or the maximum number of the scheduled cells is the maximum number of supported cells configured by the network device for the terminal.

30. The method according to any one of claims 27 to 29, wherein the HARQ feedback is further used to feedback the PDSCH scheduled by at least one single-cell downlink control information (SC DCI); and
the HARQ feedback further comprises a sub-codebook corresponding to the at least one SC DCI respectively; or, the HARQ feedback further comprises a same sub-codebook shared by the at least one SC DCI; or, the HARQ feedback further comprises a same sub-codebook shared by the at least one SC DCI and the MC DCI that schedules one PDSCH.

31. The method according to any one of claims 27 to 30, wherein feedback bits of each sub-codebook in the HARQ feedback are sorted in time-frequency order.

32. The method according to any one of claims 27 to 31, wherein the sub-codebook in the HARQ feedback is sorted according to a first rule; and
wherein first rule comprises sorting according to at least one of a type of sub-codebook, a cell index, a time domain order of DCI, a frequency domain order of DCI, a time domain order of PDSCH, a PDCCH monitoring occasion index, and a DCI decoding success time order.

33. The method according to any one of claims 27 to 32, wherein the at least one MC DCI comprises a second MC DCI; and
when a number of bits corresponding to the second MC DCI in the sub-codebook is greater than a number of PDSCHs actually scheduled by the second MC DCI, the sub-codebook comprises a valid feedback bit.

34. The method according to claim 25, wherein a number of bits of the HARQ feedback is determined according to a first number; and
the first number comprises any one of a number of PDSCHs scheduled by the MC DCI, a number of cells scheduled by the MC DCI, a number of carriers scheduled by the MC DCI, a number of component carriers scheduled by the MC DCI, and a number of subbands scheduled by the MC DCI.

35. The method according to claim 34, wherein the HARQ feedback is used to feed back the PDSCH scheduled by at least one MC DCI, the HARQ feedback comprises a first sub-codebook shared by the at least one MC DCI, and a number of bits of the first sub-codebook is determined according to a second number; and
wherein the second number comprises any one of a total number of PDSCHs scheduled by the at least one MC DCI, a total number of cells scheduled by the at least one MC DCI, a total number of carriers scheduled by the at least one MC DCI, a total number of component carriers scheduled by the at least one MC DCI, and a total number of subbands scheduled by the at least one MC DCI.

36. The method according to claim 35, wherein the HARQ feedback is further used to feed back the PDSCH scheduled by at least one SC DCI, the HARQ feedback comprises a second sub-codebook shared by the at least one SC DCI, and a number of bits of the second sub-codebook is determined according to a third number; and
wherein the third number comprises any one of a total number of PDSCHs scheduled by the at least one SC DCI, a total number of cells scheduled by the at least one SC DCI, a total number of carriers scheduled by the at least one SC DCI, a total number of component carriers scheduled by the at least one SC DCI, and a total number of subbands scheduled by the at least one SC DCI.

37. The method according to claim 35 or 36, wherein the at least one MC DCI comprises at least two MC DCIs; and
in the first sub-codebook, feedback bits corresponding to the MC DCI of a same scheduling case are sorted in time-frequency order; and
wherein the same scheduling case comprises any one of the following being the same: a number of scheduled PDSCHs, a number of scheduled cells, a number of scheduled carriers, a number of scheduled component carriers, and a number of scheduled subbands.

38. The method according to claim 35 or 36, wherein the at least one MC DCI comprises at least two MC DCIs;
in the first sub-codebook, feedback bits corresponding to the MC DCIs of different scheduling cases are sorted according to a number of scheduled PDSCHs; and
wherein the different scheduling cases comprise any one of the following being different: a number of scheduled PDSCHs, a number of scheduled cells, a number of scheduled carriers, a number of scheduled component carriers, and a number of scheduled subbands.

39. The method according to claim 35 or 36, wherein feedback bits in the first sub-codebook are sorted in time-frequency order.

40. The method according to claim 36, wherein the feedback bits in the second sub-codebook are sorted in time-frequency order.

41. The method according to claim 36, wherein the first sub-codebook and the second sub-codebook in the HA RQ feedback are sorted according to a second rule; and
wherein the second rule comprises sorting according to at least one of a type of sub-codebook, a cell index, a time domain order of DCI, a frequency domain order of DCI, a time domain order of PDSCH, a PDCCH monitoring occasion index, and a DCI decoding success time order.

42. The method according to claim 34, wherein the HARQ feedback is used to feed back the PDSCH scheduled by at least one MC DCI and at least one SC DCI, the HARQ feedback comprises a third sub-codebook shared by the at least one MC DCI and the at least one SC DCI, and a number of bits of the third sub-codebook is determined according to a fourth number; and
wherein the fourth number comprises any one of a total number of PDSCHs scheduled by the at least one MC DCI and the at least one SC DCI, a total number of cells scheduled by the at least one MC DCI and the at least one SC DCI, a total number of carriers scheduled by the at least one MC DCI and the at least one SC DCI, a total number of component carriers scheduled by the at least one MC DCI and the at least one SC DCI, and a total number of subbands scheduled by the at least one MC DCI and the at least one SC DCI.

43. The method according to claim 42, wherein in the third sub-codebook, feedback bits corresponding to the DCI of a same scheduling case are sorted in time-frequency order; and
wherein the same scheduling case comprises any one of the following being the same: a number of scheduled PDSCHs, a number of scheduled cells, a number of scheduled carriers, a number of scheduled component carriers, and a number of scheduled subbands.

44. The method according to claim 42, wherein in the third sub-codebook, feedback bits corresponding to the DCIs of different scheduling cases are sorted according to a number of scheduled PDSCHs; and
wherein the different scheduling cases comprise any one of the following being different: a number of scheduled PDSCHs, a number of scheduled cells, a number of scheduled carriers, a number of scheduled component carriers, and a number of scheduled subbands.

45. The method according to claim 42, wherein in a case where the at least one MC DCI comprises the MC DCI for scheduling one PDSCH, the HARQ feedback comprises a third sub-codebook shared by the MC DCI for scheduling one PDSCH and the at least one SC DCI; and
in a case where the at least one MC DCI comprises the MC DCI for scheduling multiple PDSCHs, the HARQ feedback comprises a fourth sub-codebook corresponding to the MC DCI for scheduling multiple PDSCHs, and the HARQ feedback further comprises a fifth sub-codebook shared by the at least one SC DCI.

46. The method according to claim 34, wherein the HARQ feedback is used to feedback the PDSCH corresponding to the DCI of at least two different scheduling cases; and
the HARQ feedback comprises sub-codebooks corresponding to the DCIs of the at least two different scheduling cases, respectively, and a number of bits of each of the sub-codebooks is determined according to a fifth number;
wherein the fifth number comprises any one of a total number of PDSCHs scheduled by the DCI of a same scheduling case, a total number of cells scheduled by the DCI of the same scheduling case, a total number of carriers scheduled by the DCI of the same scheduling case, a total number of component carriers scheduled by the DCI of the same scheduling case, and a total number of subbands scheduled by the DCI of the same scheduling case;
the different scheduling cases comprise any one of the following being different: a number of scheduled PDSCHs, a number of scheduled cells, a number of scheduled carriers, a number of scheduled component carriers, and a number of scheduled subbands; and
the same scheduling case comprises any one of the following being the same: a number of scheduled PDSCHs, a number of scheduled cells, a number of scheduled carriers, a number of scheduled component carriers, and a number of scheduled subbands.

47. The method according to claim 46, wherein feedback bits corresponding to the DCI of the same scheduling case in the HARQ feedback are sorted in time-frequency order.

48. The method according to claim 46, wherein the sub-codebooks corresponding to the DCIs of different scheduling cases in the HARQ feedback are sorted according to the number of scheduled PDSCHs.

49. A hybrid automatic repeat request HARQ feedback apparatus, comprising:
a sending module, configured to send a HARQ feedback of a downlink shared channel (PDSCH) scheduled based on multi-cell downlink control information (MC DCI).

50. A hybrid automatic repeat request HARQ feedback apparatus, comprising:
a receiving module, configured to receive a HARQ feedback of a downlink shared channel (PDSCH) scheduled based on multi-cell downlink control information (MC DCI).

51. A terminal, comprising a processor and a transceiver connected to the processor;
the transceiver is configured to send a HARQ feedback of a downlink shared channel (PDSCH) scheduled based on multi-cell downlink control information (MC DCI).

52. A network device, comprising a processor and a transceiver connected to the processor;
the transceiver is configured to receive a HARQ feedback of a downlink shared channel (PDSCH) scheduled based on multi-cell downlink control information (MC DCI).

53. A computer-readable storage medium, wherein a computer program is stored in the storage medium, and the computer program is used to be executed by a processor to implement the method according to anyone of claims 1 to 48.

54. A chip, comprising a programmable logic circuit and/or program instructions, and when the chip is running, the method according to anyone of claims 1 to 48 is implemented.

55. A computer program product or a computer program, wherein the computer program product or the computer program comprises computer instructions, wherein the computer instructions are stored in a computer-readable storage medium, and a processor reads and executes the computer instructions from the computer-readable storage medium to implement the method according to anyone of claims 1 to 48.
